# EUROPÄISCHE PATENTSCHRIFT

(11) **EP 2 502 210 B1**
(45) Veröffentlichungstag und Bekanntmachung des Hinweises auf die Patenterteilung: **18.10.2017**
(21) Anmeldenummer: 10742451.7
(22) Anmeldetag: 27.07.2010
(51) Int. Cl.: G09F 3/00, G07D 7/14, B42D 25/29, B42D 25/45, B42D 25/425, G07D 7/00, G06K 19/04

(54) **SICHERHEITSETIKETT ZUR KENNZEICHNUNG VON WAREN**
SECURITY LABEL FOR IDENTIFYING PRODUCTS
ÉTIQUETTE DE SÉCURITÉ POUR LE MARQUAGE D'ARTICLES

(30) Priorität: 18.11.2009 DE 102009053808; 18.11.2009 US 262167 P
(43) Veröffentlichungstag der Anmeldung: 26.09.2012
(73) Patentinhaber: Bundesanstalt Für Materialforschung Und -Prüfung (BAM), 12205 Berlin (DE)
(72) Erfinder: PRETSCH, Thorsten, 12169 Berlin (DE); MÜLLER, Werner, 12203 Berlin (DE)
(74) Vertreter: Zimmermann & Partner Patentanwälte mbB
(86) Internationale Anmeldenummer: PCT/EP2010/060913
(87) Internationale Veröffentlichungsnummer: WO 2011/060970

(56) Entgegenhaltungen:
- EP-A1- 0 701 231
- WO-A1-2004/090042
- WO-A1-2005/120855
- DE-A1-102006 012 169
- Anonym: "Formgedächtnis-Polymer"[Online] XP002599804 Wikipedia, Die freie Enzyklopädie Gefunden im Internet: URL:http://de.wikipedia.org/wiki/Formgedäc htnis-Polymer> [gefunden am 2010-09-08]

## Beschreibung

Die vorliegende Erfindung betrifft ein Sicherheitsetikett zur Kennzeichnung von Waren sowie dessen Verwendung. Weitere Aspekte der Erfindung betreffen Herstellungsverfahren für ein solches Sicherheitsetikett sowie Ausleseverfahren für ein solches Sicherheitsetikett.

Heute sind nahezu alle Branchen von Produktpiraterie betroffen. Gerade im Bereich von Produkten, deren Wert in erheblichem Maße durch ihre Ästhetik, ihr Design und besondere handwerkliche Qualität bestimmt ist, z. B. bei Kleidung, ist Produktpiraterie weit verbreitet. Unternehmen leiden enorm unter dieser Entwicklung. Allein in Deutschland sollen nach Schätzungen des Justizministeriums jährlich ca. 50.000 Arbeitsplätze aufgrund von Produktpiraterie verloren gehen. Im gesamteuropäischen Raum sollen insgesamt sogar 300.000 Arbeitsplätze betroffen sein.

Gegen die Produktpiraterie werden zunehmend Schutztechnologien in Form von technischen Sicherungsmitteln eingesetzt. Solche Sicherungsmittel umfassen beispielsweise Hologramme, Sicherheitsetiketten (VOID-Folien, Dokumentenfolien), Mikrofarbcodes, digitale Wasserzeichen, Kopie-Erkennung bzw. Datamatrix, DNA- oder Nano-Technologien, und RFID.

Jedoch sind viele dieser Technologien aufwendig und kompliziert sowohl in der Herstellung als auch in der Anwendung bei der Echtheitsprüfung. Beispielsweise ist die Herstellung eines Hologramms aufwendig und kompliziert. Voraussetzungen für die Aufzeichnung von Hologrammen ist die zeitliche und räumliche Stabilität der durch die Überlagerung der Wellenfelder ausgebildeten Interferenzmuster. Die aufzuzeichnenden Objekte dürfen sich während der manchmal Minuten dauernden Belichtungszeit nicht bewegen. Um ein Hologramm aufnehmen zu können, müssen deshalb die Teile der Aufnahmeapparatur und das Objekt räumlich fixiert werden. Meist wird der komplette holographische Aufbau oder zumindest Teile davon auf einen schwingungsfreien Tisch montiert. Solch ein Tisch besitzt eine große Masse, oft mehrere Tonnen Beton oder schwere Steinplatten, und steht auf mechanischen oder pneumatisch gedämpften Füßen. Zunächst wird mit Laserstrahlen ein Prototyp aus fotoempfindlichem Material erzeugt. Diese Vorlage ist allerdings zu weich, um damit Hologramme etwa in Kunststoff zu prägen. Deshalb wird das filigrane Relief galvanisch auf ein härteres Material wie Nickel kopiert. Auf eine Walze aufgebracht, überträgt diese Nickelvorlage das Hologramm auf eine Kunststoffolie. Nickel hat jedoch den Nachteil, daß es relativ weich ist und schnell verschleißt. Zur Produktion großer Hologrammstückzahlen benötigt man deshalb viele solche Prägevorlagen.

Die WO 2005/120855 A1 beschreibt Sicherheitsvorrichtungen, umfassend ein flüssigkristallines Polymermaterial und ein Formgedächtnispolymer, die in unterschiedlicher Größe und Form zu Authentifizierungs- und Sicherungszwecken verwendet werden können. Insbesondere wird in Reaktion auf einen Hitze-Stimulus eine Formänderung des Formgedächtnispolymers ausgelöst, die auf Grund der Dehnung oder Kontraktion eines in ein Substrat eingebetteten flüssigkristallinen Materials zu einer vorübergehenden Farbänderung des Substrates führt.

Im Hinblick auf das oben Gesagte, schlägt die vorliegende Erfindung ein Sicherheitsetikett gemäß Anspruch 1 oder 5, eine Ware gemäß Anspruch 13, eine Verwendung gemäß Anspruch 14, Herstellungsverfahren gemäß den Ansprüchen 15, 16 und 18 sowie Ausleseverfahren gemäß den Ansprüchen 17 und 19 vor. Weitere Aspekte, Vorteile und Einzelheiten der vorliegenden Erfindung ergeben sich aus den Unteransprüchen, der Beschreibung sowie den beigefügten Zeichnungen.

Gemäß einem Ausführungsbeispiel umfaßt ein Sicherheitsetikett zur Kennzeichnung einer Ware eine Schicht mit einem Formgedächtnispolymer, wobei die Schicht in einem ersten Zustand ein erstes Oberflächenprofil aufweist, das Informationen zur Identifizierung der Ware beinhaltet, und wobei die Schicht mindestens einen zweiten Zustand einnehmen kann, wobei die Schicht in dem zweiten Zustand ein zweites Oberflächenprofil aufweist, das von dem ersten Oberflächenprofil verschieden ist, wobei das Sicherheitsetikett so angepaßt ist, daß die Schicht zum Auslesen des Sicherheitsetiketts von dem zweiten Zustand in den ersten Zustand schaltbar ist, und ein Verbindungsmittel zum Verbinden der Schicht mit der Ware. Beispielsweise kann das erste Oberflächenprofil die permanente Form der Formgedächtnispolymerschicht sein. Gemäß einem Ausführungsbeispiel wird das zweite Oberflächenprofil durch Programmieren der Formgedächtnispolymerschicht erzeugt. Dabei kann das zweite Oberflächenprofil beispielsweise eine ebene Oberfläche sein. Gemäß einer anderen Weiterbildung kann das zweite Oberflächenprofil jedoch auch strukturiert sein, jedoch eine andere Form als das erste Oberflächenprofil aufweisen.

Gemäß einem Ausführungsbeispiel umfaßt ein Sicherheitsetikett zur Kennzeichnung einer Ware eine Schicht mit einem Formgedächtnispolymer. In die Schicht ist ein Oberflächenprofil, das Informationen zur Identifizierung der Ware beinhaltet, eingeprägt. Die Schicht kann mindestens einen ersten und einen zweiten Zustand einnehmen, wobei die Schicht in dem ersten Zustand eine glatte Oberfläche und in dem zweiten Zustand das eingeprägte Oberflächenprofil aufweist. Weiterhin ist das Sicherheitsetikett so angepaßt, daß die Schicht beim Auslesen des Sicherheitsetiketts von dem ersten Zustand in den zweiten Zustand schaltbar ist. Darüber hinaus weist das Sicherheitsetikett ein Verbindungsmittel zum Verbinden der Schicht mit der Ware auf.

Zur Überprüfung der Echtheit eines Produkts, z.B. eines Kleidungsstücks, einer Flasche Wein, einer Uhr, eines Medikaments, eines Markenartikels, etc., kann das Produkt mit dem beschriebenen Sicherheitsetikett, nachstehend auch Label genannt, mit einem Formgedächtnispolymer (FGP) speziell gekennzeichnet werden. Das Kunststoffteil oder die Kunststoffolie, die das FGP umfaßt, kann in unterschiedlicher Weise unauffällig in das Produkt integriert werden. Zunächst zeigt es keine besonderen Informationen an, da es sich im ersten Zustand mit glatter Oberfläche befindet. Das FGP hat zuvor jedoch einen oder mehrere Programmierungsprozesse durchlaufen. Dadurch enthält es in seinem Formgedächtnis versteckt spezielle Informationen über das zu schützende Produkt. Ruft man später durch Applikation eines oder mehrerer externer Stimuli (Erwärmen, Anlegen eines Magnetfeldes, etc.) einen oder mehrere Formgedächtniseffekte ab, so enthüllen sich diese Informationen. An Hand dieser Informationen kann die Echtheit des gekennzeichneten Produkts nachgewiesen werden.

Ein Fälscher, der ein solches Sicherheitsetikett nachmachen möchte, muß nun mehrere Probleme lösen. Zunächst einmal muß er sich so detaillierte Kenntnisse über die neue Sicherheitstechnologie verschaffen, daß er in die Lage versetzt wird, die Sicherheitsetiketten nachzuahmen. Er muß weiterhin die ganz speziellen Materialien besorgen, die für das Sicherheitsetikett verwendet wurden. Er muß über die speziellen Informationen verfügen, die im Formgedächtnis des Materials versteckt werden. Er muß weiterhin über die Programmierungstechnologie verfügen. Eine Fälschung würde ein genaues Wissen über die thermo-mechanischen Eigenschaften von FGPen mit Zweiform- oder Dreiformgedächtnis einschließlich deren Programmierung voraussetzen. Insgesamt dürften sich erhebliche Schwierigkeiten ergeben, dieses Sicherheitslabel zu fälschen. Das Auslesen des Formgedächtniseffektes und damit das Enthüllen der versteckten Informationen kann jedoch so einfach gestaltet werden, daß ein Händler die Echtheit des Produktes im Laden selbst überprüfen kann.

Gemäß einer Weiterbildung kann in die Schicht weiterhin ein zweites Oberflächenprofil eingeprägt sein, wobei die Schicht in einem dritten Zustand das eingeprägte zweite Oberflächenprofil aufweist. Das Sicherheitsetikett ist dann so angepaßt, daß die Schicht beim Auslesen des Sicherheitsetiketts von dem ersten Zustand in den dritten Zustand gebracht werden kann.

Durch Verwendung sogenannter Dreiformgedächtnis-FGPe können drei unterschiedliche Oberflächenformen in der Schicht gespeichert werden, wobei zwei dieser Formen Informationen tragen können. Insofern wird nun die Fälschungssicherheit gegenüber den "einfacheren" Sicherheitsetiketten mit Zweiformgedächtnis erhöht.

Gemäß noch einer Weiterbildung kann das Sicherheitsetikett so eingerichtet sein, daß die Schicht von dem zweiten Zustand und/oder dem dritten Zustand wieder in den ersten Zustand gebracht werden kann.

Mit Hilfe von sogenannten Zweiwege-FGPen kann das Sicherheitsetikett beliebig oft zwischen dem "glatten" Ausgangszustand und dem programmierten Oberflächenprofil hin und her geschaltet werden. Auf diese Weise sind mehrfache Ablesungen des Sicherheitsetiketts, beispielsweise auf verschiedenen Handelsstufen oder bei Import durch den Zoll möglich.

Gemäß einem Ausführungsbeispiel weist die Schicht eine Dicke im Bereich von 0,1 mm bis 20 mm auf.

Ausführungsbeispiele der vorliegenden Erfindung umfassen ein Formgedächtnispolymer, das ausgewählt ist aus der Gruppe bestehend aus: lineare Blockcopolymere, insbesondere Polyurethane und Polyurethane mit ionischen oder mesogenen Komponenten, Blockcopolymere aus Polyethylenterephthalat und Polyethylenoxid, Blockcopolymere aus Polystyrol und Poly(1,4-butadien), ABA Triblock-Copolymere aus Poly-(2-methyl-2-oxazolin) (A-Block) und Polytetrahydrofuran (B-Block), Multiblockcopolymere aus Polyurethanen mit Poly(ε-caprolacton)-Schaltsegment, Blockcopolymere aus Polyethylenterephthalat und Polyethylenoxid, Blockcopolymere aus Polystyrol und Poly(1,4-butadien), Polyurethansysteme, deren Hartsegment-bildende Phase aus Methylendiphenyldiisocyanat (MDI) und einem Diol, insbesondere 1,4-Butandiol, oder einem Diamin und einem Schaltsegment auf der Basis eines Oligoethers, insbesondere Polytetrahydrofuran oder eines Oligoesters, insbesondere Polyethylenadipat, Polypropylenadipat, Polybutylenadipat, Polypentylenadipat oder Polyhexalenadipat, besteht,

Materialien mit einer Hartsegment-bildenden Phase aus Toluol-2,4-diisocyanat, MDI, Diisocyanaten, die insbesondere aus MDI oder Hexamethylendiisocyanat in Carbodiimid-modifizierter Form und aus Kettenverlängerern, insbesondere Ethylenglycol, Bis(2-hydroxyethyl)hydrochinon oder einer Kombination aus 2,2-Bis(4-hydroxyphenyl)propan und Ethylenoxid aufgebaut sind, deren Schaltsegment-bestimmende Blöcke aus Oligoethern, insbesondere Polyethylenoxid, Polypropylenoxid, Polytetrahydrofuran oder aus einer Kombination aus 2,2-Bis(4-hydroxyphenyl)propan und Propylenoxid, oder aus Oligoestern, insbesondere Polybutylenadipat, bestehen, Materialien aus Polynorbornen, Graft-Copolymere aus Polyethylen/Nylon-6, Blockcopolymere mit polyedrischen oligomeren Silsesquioxanen (POSS), einschließlich den Kombinationen Polyurethan/POSS, Epoxid/POSS, Polysiloxan/POSS, Polymethylmethacrylat/POSS, silikonbasierte FGPe und Materialien aus Poly(cycloocten)ε-caprolacton.

Weitere Ausführungsbeispiele der vorliegenden Erfindung umfassen ein 6 Formgedächtnispolymer, das ausgewählt ist aus der Gruppe bestehend aus: Polyvinylchlorid, Polyethylen-Polyvinylacetat-Copolymere, kovalent vernetzte Copolymersysteme aus Stearylacrylat und Ester der Methacrylsäure, trans-Polyisopren/Polyurethan-basiertes, segregiertes FGP, Poly(ether ester) wie Poly(ethylen oxid)/Poly(ethylen terephthalat) Copolymere, Norbornyl/POSS Copolymere, Poly(methylen-1,3-cyclopentan) und dessen Copolymer mit Polyethylen, Styrol/Butadien Copolymere, Thiol-en/acrylat Copolymere, Polynorbornen, Polymernetzwerke hergestellt aus Poly(ε-caprolacton) (PCL) und Dimethacrylaten, Poly(ε-caprolacton) (PCL)-basierte FGPe, acrylat-basierte FGPe, (Meth)acrylat Netzwerke, quervernetztes Polyethylen, epoxid-basierte FGPe, ein Polyurethan/Phenoxy-Blend, ein Polyurethane/Polyvinylchlorid (PVC)-Blend.

Noch weitere Ausführungsbeispiele der vorliegenden Erfindung umfassen ein Formgedächtnispolymer, das als Formgedächtnispolymerkomposit ausgebildet ist, wobei in der Formgedächtnispolymermatrix mindestens ein Füllmaterial eingebettet ist, das ausgewählt ist aus der Gruppe umfassend: magnetische Nanoteilchen, ferromagnetische Partikel, insbesondere AlN-Partikel, Ni-Partikel, Fe₂O₃-Partikel, Fe₃O₄-Partikel, NiZn-Partikel, , einen Nanoclay umfassend Siliziumnitrid, Siliziumcarbid, Siliziumdioxid, Zirkonoxid und/oder Aluminiumoxid, oligomere Silsesquioxane, Graphit-Partikel, Kohlenstoffnanoröhrchen, Kunstfasern, insbesondere Kohlenstoffasern, Glasfasern oder Kevlarfasern, Metallpartikel, thermochrome Materialien, insbesondere Rutil, Zinkoxid, 9,9'-Bixanthyliden, 10,10'-Bianthronyliden oder Bis-diethylammonium-tetrachloro-cuprat(II), und Kombinationen der genannten Füllmaterialien. Die Füllstoffe sind geeignet, um die mechanischen, elektrischen, magnetischen und/oder optischen Eigenschaften des FGPs einzustellen und an einen jeweiligen Anwendungszweck anzupassen. Beispielsweise zeigt Bis-diethylammonium-tetrachloro-cuprat(II) bei ungefähr 53°C eine fest-fest Phasenumwandlung, die mit einem Farbumschlag von grün nach gelb einhergeht.

Sicherheitsetiketten gemäß weiteren Ausführungsbeispiele der vorliegenden Erfindung umfassen ein Formgedächtnispolymer, das ausgewählt ist aus der Gruppe bestehend aus: ein Poly(ester urethan)-Copolymer, ein nematisches Flüssigkristallelastomer, ein Photodeformationspolymer. Solche Materialien können insbesondere ein Zweiformgedächtnis und einen Zweiwegeeffekt aufweisen.

Weiterhin kann das Formgedächtnispolymer als thermo-sensitives und/oder UV-sensitives und/oder magnetosensitives und/oder elektroaktives Material ausgebildet sein. Optisch steuerbare Formgedächtnispolymere umfassen z.B. Butylacrylate, die an ihren Seitenketten über Zimtsäure-Gruppen unter UV-Licht einer bestimmten Wellenlänge vernetzen und die Bindung bei Bestrahlung mit einer anderen Wellenlänge wieder lösen. Magnetisch steuerbare Formgedächtnispolymere können z. B. durch Einarbeitung fein verteilter magnetischer Nanoteilchen aus z.B. Eisenoxid in den Kunststoff erhalten werden. Solche Materialien sind dann in der Lage, die Energie eines magnetischen Feldes in Wärme umzuwandeln. Über den Anteil an Nanoteilchen und die Stärke des Magnetfeldes kann eine gewünschte Temperatur im Polymer gezielt eingestellt werden. Als elektroaktive Polymere (EAP) können z.B. Formgedächtnispolymer-Komposite mit Kohlenstoffnanoröhrchen eingesetzt werden. Die vorgenannten Materialien eröffnen damit verschiedene Möglichkeiten, den Formgedächtniseffekt auszulösen.

Weiterhin sind Polymere aus der Klasse der "perfluorosulphonic acid ionomers" (PFSA) zur Verwendung als Formgedächtnispolymere in Ausführungsbeispielen der vorliegenden Erfindung anwendbar. Die PFSA weisen typischerweise einen breiten T_{g}-Bereich auf, der beispielsweise zwischen 55°C und 130°C liegen kann. Durch Programmierung kann man den PFSA beispielsweise ein Zwei-, Drei- und sogar Vier-Formgedächtnis aufzwingen. Untersuchungen der Erfinder an einem Poly(ester urethan) zeigen, daß nach erfolgter Programmierung mindestens vier separate Dehnungsrückstellungen möglich sind. In manchen Fällen konnten bereits sechs aufeinanderfolgende Dehnungsrückstellungen in dem Temperaturbereich -60°C bis Raumtemperatur erfolgreich durchgeführt werden.

Ein weiterer Aspekt der vorliegenden Erfindung betrifft eine Ware, die mit einem Sicherheitsetikett gemäß einem der Ausführungsbeispiele gekennzeichnet ist.

Gemäß einem weiteren Aspekt der vorliegenden Erfindung ist die Verwendung eines Sicherheitsetiketts nach einem der Ausführungsbeispiele zur Kennzeichnung einer Ware umfaßt.

Gemäß einem weiteren Ausführungsbeispiel der vorliegenden Erfindung umfaßt ein Herstellungsverfahren für ein Sicherheitsetikett das Erwärmen der Formgedächtnispolymerschicht über eine Schalttemperatur des Formgedächtnispolymers, das Einprägen einer dreidimensionalen Oberflächenstruktur, die Informationen zur Identifizierung der Ware beinhaltet, in die Formgedächtnispolymerschicht sowie das Abkühlen der Formgedächtnispolymerschicht unter eine Fixierungstemperatur des Formgedächtnispolymers, um die Formgedächtnispolymerschicht in den ersten Zustand zu überführen.

Gemäß einem anderen Ausführungsbeispiel der vorliegenden Erfindung umfaßt ein Herstellungsverfahren für ein Sicherheitsetikett das Bereitstellen einer Formgedächtnispolymerschicht, die eine erste und eine zweite Schalttemperatur aufweist, wobei die erste Schalttemperatur höher ist als die zweite Schalttemperatur, das Erwärmen der Formgedächtnispolymerschicht auf eine Temperatur oberhalb der ersten Schalttemperatur des Formgedächtnispolymers, das Einprägen einer ersten dreidimensionalen Oberflächenstruktur, die erste Informationen zur Identifizierung einer Ware beinhaltet, in die Formgedächtnispolymerschicht, das Abkühlen der Formgedächtnispolymerschicht unter eine erste Fixierungstemperatur des Formgedächtnispolymers, die zwischen der ersten und der zweiten Schalttemperatur liegt, um die erste Oberflächenstruktur zu fixieren, das Einprägen einer zweiten dreidimensionalen Oberflächenstruktur, die zweite Informationen zur Identifizierung einer Ware beinhaltet, in die Formgedächtnispolymerschicht bei einer Temperatur, die oberhalb der zweiten Schalttemperatur liegt, und das Abkühlen der Formgedächtnispolymerschicht unter eine zweite Fixierungstemperatur des Formgedächtnispolymers, die unterhalb der zweiten Schalttemperatur liegt, um die zweite Oberflächenstruktur zu fixieren.

Gemäß einem weiteren Aspekt der vorliegenden Erfindung umfaßt ein Ausleseverfahren für ein Sicherheitsetikett das Bereitstellen eines Sicherheitsetiketts der oben beschriebenen Art, das Erwärmen des Sicherheitsetiketts über eine Schalttemperatur des Formgedächtnispolymers, so daß die eingeprägte dreidimensionale Oberflächenstruktur erscheint, und das Ablesen der in der dreidimensionalen Oberflächenstruktur gespeicherten Information bezüglich der Ware.

Gemäß einem anderen Aspekt der vorliegenden Erfindung umfaßt ein Ausleseverfahren für ein Sicherheitsetikett das Bereitstellen eines Sicherheitsetiketts der oben beschriebenen Art, das Erwärmen des Sicherheitsetiketts über eine zweite Schalttemperatur des Formgedächtnispolymers, so daß eine eingeprägte zweite dreidimensionale Oberflächenstruktur erscheint, das Ablesen der in der zweiten dreidimensionalen Oberflächenstruktur gespeicherten Information bezüglich der Ware, das Erwärmen des Sicherheitsetiketts über eine erste Schalttemperatur des Formgedächtnispolymers, so daß eine eingeprägte erste dreidimensionale Oberflächenstruktur erscheint, und das Ablesen der in der ersten dreidimensionalen Oberflächenstruktur gespeicherten Information bezüglich der Ware.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt
- Fig. 1: ein Sicherheitsetikett gemäß einem Ausführungsbeispiel der vorliegenden Erfindung.
- Fig. 2: verschiedene Schritte bei der Durchführung eines Herstellungsverfahrens gemäß einem ersten Ausführungsbeispiel der vorliegenden Erfindung.
- Fig. 3: ein Herstellungsverfahren gemäß einem weiteren Ausführungsbeispiel der vorliegenden Erfindung.
- Fig. 4: ein Herstellungs- und Ausleseverfahren gemäß einem weiteren Ausführungsbeispiel der vorliegenden Erfindung.
- Fig. 5: ein Herstellungs- und Ausleseverfahren gemäß noch einem weiteren Ausführungsbeispiel der vorliegenden Erfindung.
- Fig. 6: verschiedene Schritte bei der Durchführung eines Herstellungsverfahrens gemäß einem anderen Ausführungsbeispiel der vorliegenden Erfindung.
- Fig. 7: Bildsequenzen der Oberfläche eines duroplastischen FGPs nach mechanischer Vorbehandlung (links, permanente Form), nach Programmierung (mittig, temporäre Form) und nach Erwärmen (rechts, permanente Form).
- Fig. 8: Darstellungen der Oberfläche eines duroplastischen FGPs nach mechanischer Vorbehandlung (links, permanente Form), nach Programmierung mit einem 2-Punkt-Stempel (mittig, temporäre Form) und nach Erwärmen (rechts, rückgestellte permanente Form).
- Fig. 9: eine Darstellung von 5 aufeinander folgenden Zyklen der Oberfläche eines duroplastischen FGPs.

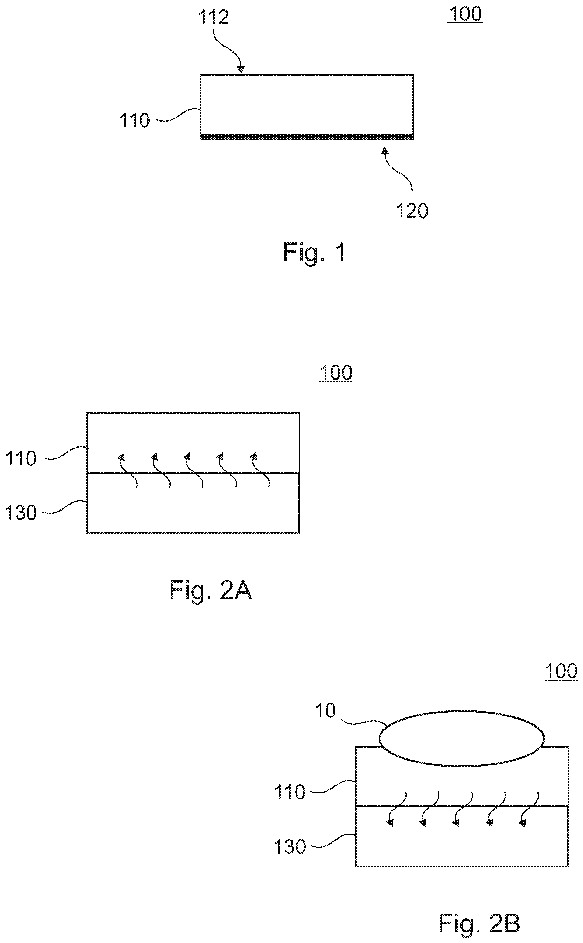

Fig. 1 zeigt ein Sicherheitsetikett 100 gemäß einem Ausführungsbeispiel der vorliegenden Erfindung. Das Sicherheitsetikett 100 umfaßt eine Schicht 110 umfassend ein Formgedächtnispolymer. Als Formgedächtnispolymere (FGPe) werden im allgemeinen Kunststoffe bezeichnet, die sich nach einer Umformung an ihre frühere äußere Form scheinbar "erinnern" können und insofern ein Formgedächtnis besitzen. Für zahlreiche FGPe wird die Rückverformung durch das Überschreiten einer sogenannten Schalttemperatur ausgelöst. Unter diesen thermosensitiven FGPen kann man allgemein unterscheiden zwischen FGPen, für die die Schalttemperatur einem Glasübergang entspricht (Tₜᵣₐₙₛ = Tg), und FGPen, für die die Schalttemperatur der Schmelztemperatur kristalliner Weichsegmente entspricht (Tₜᵣₐₙₛ = Tₘ). Im letzeren Fall weisen die FGPe zwei Komponenten auf, wobei eine erste Komponente ein elastisches Polymer (Hartsegment) und die zweite Komponente ein aushärtendes Wachs (Weichsegment) ist. Deformiert man das FGP, so wird das elastische Polymer durch das ausgehärtete Wachs in seiner deformierten Form "arretiert". Erwärmt man das FGP anschließend, so wird das Wachs weich und kann einer rückstellenden Federkraft der elastischen Komponente nicht mehr entgegenwirken. Das FGP nimmt seine ursprüngliche Form an.

In die Schicht 110 ist nun ein Oberflächenprofil, das Informationen zur Identifizierung der Ware beinhaltet, eingeprägt. Dreidimensionale Oberflächenstrukturen können mit relativ hoher Auflösung durch Gebrauch eines Stempelwerkzeuges eingeprägt werden. Weitere Programmierungen erlauben die Dechiffrierung von zuvor eingeprägten Informationen. Auf dieser Grundlage kann die programmierte FGP-Schicht durch Abrufen von z.B. thermischinduzierten Formgedächtnisübergängen zur Authentifizierungs- oder Identifizierung von Gegenständen genutzt werden. Weiterhin kann das FGP-Label eine optoelektronisch lesbare Schrift (Strichcode) enthalten, die aus verschieden breiten, parallelen Strichen und Lücken besteht. Alternativ oder zusätzlich kann das Oberflächenprofil auch einen zweidimensionalen Data Matrix Code enthalten. Der Data Matrix Code weist insbesondere eine hohe Informationsdichte pro FGP-Flächeneinheit auf. In beiden Fällen ist eine Direktbeschriftung des FGP-Labels mit einem Laser oder mittels Nadelprägung möglich. Zusätzlich ist für FGPe mit Mehrformgedächtnis die Kombination verschiedener Code-Schemas in ein und demselben FGP mittels der FGP-Label-Technologie möglich.

Die Schicht 110 weist in einem ersten Zustand eine glatte Oberfläche 112 auf. In einem zweiten Zustand weist die Oberfläche 112 das eingeprägte Oberflächenprofil auf. Je nach Anwendung ist die Schicht 112 typischerweise zwischen 0,1 mm und 20 mm dick. Insbesondere kann die Schicht eine Dicke im Bereich von 1 mm bis 5 mm, insbesondere 2 mm bis 3 mm, aufweisen. Dicken in diesem Bereich dürften für die meisten Anwendungen insofern ausreichen, als sie das Einprägen einer Oberflächenstruktur mit Profilhöhen bis ungefähr 4 mm erlauben. Möglich ist jedoch auch die Verwendung dünner FGP-Folien, die aufgeklebt oder aufkaschiert werden können.

Das Sicherheitsetikett 100 ist nun so angepaßt, daß die Schicht 110 beim Auslesen des Sicherheitsetiketts von dem ersten Zustand in den zweiten Zustand gebracht werden kann. Das Sicherheitsetikett weist weiterhin ein Verbindungsmittel (120) zum Verbinden der Schicht mit einer Ware auf. Beispielsweise kann das Verbindungsmittel, wie in Fig. 1 dargestellt, eine Klebeschicht sein. Gemäß weiterer Ausführungsbeispiele ist als Verbindungsmittel beispielsweise ein Randbereich der Schicht 110 oder ein zusätzlicher Bereich oder eine zusätzliche Schicht vorgesehen, die mit der Ware über Kleben, Nähen, Schweißen oder ähnliche Verbindungstechniken verbindbar sind.

Für das Sicherheitsetikett können verschiedene Formgedächtnispolymere verwendet werden. Diese kann man beispielsweise danach klassifizieren, ob der Effekt nur einmal hervorgerufen werden kann (Einwege-Effekt) oder aber reversibel ist (Zweiwege-Effekt). Weiterhin können die FGPe danach klassifiziert werden, ob sie zusätzlich zu ihrer glatten Grundstruktur mit ein oder zwei Oberflächenprofilen programmiert werden können (Zweiform- bzw. Dreiformgedächtnis).

Gemäß einem Ausführungsbeispiel ist das Formgedächtnispolymer der Schicht 110 ein FGP mit Einwege-Effekt (engl.: "one-way shape memory polymer") und Zweiformgedächtnis (engl.: dual-shape). Dies sind FGPe mit einem sogenannten Einwege-Effekt, bei denen nach der Programmierung einmalig der Formgedächtniseffekt abgerufen werden kann und somit ist der einmalige Echtheitsnachweis möglich ist. Jedoch kann bei FGPen mit Einwege-Effekt eine Oberflächenstruktur nach dem Auslesen neu programmiert werden. Auf diese Weise können auch FGPe mit Einwege-Effekt mehrmals verwendet werden.

Gemäß einem anderen Ausführungsbeispiel ist das Formgedächtnispolymer der Schicht 110 ein FGP mit Zweiwege-Effekt (engl.: "two-way shape memory polymers") und Zweiformgedächtnis. Dies sind FGPe mit einem sogenannten Zweiwege-Effekt, die reversibel durch Applikation externer Stimuli zwischen zwei Formen, der sogenannten "permanenten" und "temporären" Form hin- und herspringen können, wodurch der Echtheitsnachweis beliebig oft durchführbar ist.

Gemäß noch einem Ausführungsbeispiel ist das Formgedächtnispolymer der Schicht 110 ein FGP mit Einwege-Effekt und Dreiformgedächtnis (engl.: "triple-shape polymers"). Dies sind FGPe, in die zwei temporäre Formen eingeprägt und dementsprechend später zwei Formänderungen durch Applikation externer Stimuli abgerufen werden können. FGPe mit Dreiformgedächtnis und Einwege-Effekt bieten gegenüber FGPen mit Zweiformgedächtnis und Einwege-Effekt den Vorteil, daß zwei individuelle Formänderungen abrufbar sind, was einem Zugewinn an Informationen entspricht. Darüber hinaus kann man, wenn man den zweifach programmierten Ausgangszustand bereits kennt, sehen, ob das Material bereits eine oder zwei Formänderungen vollzogen hat.

Viele bekannte FGPe weisen einen thermisch induzierten Formgedächtniseffekt auf. Das bedeutet, daß bei Erwärmung programmierter Polymermaterialien über eine definierte Übergangstemperatur eine durch Entropieelastizität angetriebene Rückverformung stattfindet. Formgedächtnispolymere sind in der Regel Polymernetzwerke, bei denen chemische (kovalente) oder physikalische (nicht kovalente) Vernetzungsstellen die permanente Form bestimmen. Phasensegregierte, lineare Block Copolymere sind aus Hart- und Weichsegmenten aufgebaut. FGPe, deren Schalttemperatur zur Formwiederherstellung deutlich über der Umgebungstemperatur liegt, eignen sich für die Verwendung im Sicherheitsetikett 100. Eine weitere Materialanforderung für das FGP besteht darin, daß die Oberflächenhärte so gewählt wird, daß hinreichend genaue Eindrücke in den Formeinprägungsprozessen entstehen.

In Vorversuchen wurden verschiedene Formgedächtnispolymere getestet und für die beschriebene Verwendung in einem Sicherheitsetikett als tauglich befunden. Als Formspeicher getestet wurden unter anderem ein thermoplastisches Poly(ester urethan)-Formgedächtnispolymer der Firma Bayer MaterialScience AG und ein duroplastisches Formgedächtnispolymer (Veriflex®) der Firma CRG Industries, LLC, sowie ein duroplastisches epoxidbasiertes FGP (Veriflex E2®).

Sicherheitsetikette gemäß Ausführungsbeispielen können ein thermoplastisches Formgedächtnispolymer, insbesondere aus der Gruppe linearer Blockcopolymere, insbesondere Polyurethane und Polyurethane mit ionischen oder mesogenen Komponenten, Blockcopolymere aus Polyethylenterephthalat und Polyethylenoxid, Blockcopolymere aus Polystyrol und Poly(1,4-butadien), ABA Triblock-Copolymere aus Poly-(2-methyl-2-oxazolin) (A-Block) und Polytetrahydrofuran (B-Block), Multiblockcopolymere aus Polyurethanen mit Poly(ε-caprolacton)-Schaltsegment, Blockcopolymere aus Polyethylenterephthalat und Polyethylenoxid, Blockcopolymere aus Polystyrol und Poly(1,4-butadien), Polyurethansysteme, deren Hartsegment-bildende Phase aus Methylendiphenyldiisocyanat (MDI) und einem Diol, insbesondere 1,4-Butandiol, oder einem Diamin und einem Schaltsegment auf der Basis eines Oligoethers, insbesondere Polytetrahydrofuran oder eines Oligoesters, insbesondere Polyethylenadipat, Polypropylenadipat, Polybutylenadipat, Polypentylenadipat oder Polyhexalenadipat, besteht, Materialien mit einer Hartsegment-bildenden Phase aus Toluol-2,4-diisocyanat, MDI, Diisocyanaten, die insbesondere aus MDI oder Hexamethylendiisocyanat in Carbodiimid-modifizierter Form und aus Kettenverlängerern, insbesondere Ethylenglycol, Bis(2-hydroxyethyl)hydrochinon oder einer Kombination aus 2,2-Bis(4-hydroxyphenyl)propan und Ethylenoxid aufgebaut sind, deren Schaltsegment-bestimmende Blöcke aus Oligoethern, insbesondere Polyethylenoxid, Polypropylenoxid, Polytetrahydrofuran oder aus einer Kombination aus 2,2-Bis(4-hydroxyphenyl)propan und Propylenoxid, oder aus Oligoestern, insbesondere Polybutylenadipat, bestehen, Materialien aus Polynorbornen, Graft-Copolymere aus Polyethylen/Nylon-6, Blockcopolymere mit polyedrischen oligomeren Silsesquioxanen (POSS), einschließlich den Kombinationen Polyurethan/POSS, Epoxid/POSS, Polysiloxan/POSS, Polymethylmethacrylat/POSS, silikonbasierte FGPe und Materialien aus Poly(cycloocten) umfassen.

Gemäß anderen Ausführungsbeispielen kann das FGP ein elastomeres FGP, insbesondere aus der Gruppe Polyvinylchlorid, Polyethylen-Polyvinylacetat-Copolymere, kovalent vernetzte Copolymersysteme aus Stearylacrylat und Ester der Methacrylsäure sein.

Gemäß weiteren Ausführungsbeispielen kann das FGP ein nematisches Flüssigkristallelastomer sein, oder auch Fotodeformations-Polymer. Derartige Materialien können über Zweiformgedächtnis und Zweiwegeeffekt verfügen.

Gemäß noch anderen Ausführungsbeispielen der vorliegenden Erfindung ist das FGP als Formgedächtnispolymer-Komposit ausgebildet. In diesem Zusammenhang wird darauf hingewiesen, dass die Begriffe Formgedächtnispolymer und Formgedächtnispolymer-Komposit austauschbar verwendet werden. Mit anderen Worten kann anstelle eines FGPs auch ein entsprechend geeignetes FGP-Komposit oder umgekehrt verwendet werden. Als FGP-Komposite werden Materialien bezeichnet, bei denen ein oder mehrere Füllstoffe in die FGP-Matrix eingebettet sind. Als Füllstoffe kommen beispielsweise in Betracht magnetische Nanoteilchen, ferromagnetische Partikel, insbesondere AlN-Partikel, Ni-Partikel, Fe₂O₃-Partikel, Fe₃O₄-Partikel, NiZn-Partikel. Ebenfalls können sogenannte Nanoclays als Füllstoffe verwendet werden. Die Nanoclays können beispielsweise auf Basis von Siliziumnitrid, Siliziumcarbid, Siliziumoxid, Zirkonoxid und/oder Aluminiumoxid gebildet sein. Andere mögliche Füllstoffe sind oligomere Silsesquioxane, Graphit-Partikel, Kohlenstoffnanoröhrchen, Kunstfasern, dabei insbesondere Kohlenstofffasern, Glasfasern oder Kevlarfasern, aber auch Metallpartikel, thermochrome Materialien, insbesondere Rutil, Zinkoxid, 9,9'-Bixanthyliden, 10,10'-Bianthronyliden oder Bis-diethylammonium-tetrachloro-cuprat(II), und Kombinationen der genannten Füllmaterialien.

Ebenfalls können als zusätzliches Identifikationsmerkmal bestimmte thermochrome Materialien, insbesondere anorganische Verbindungen, insbesondere Rutil und Zinkoxid, und organische Verbindungen, insbesondere 9,9'-Bixanthyliden und 10,10'-Bianthronyliden integriert werden. Ein weiteres Beispiel ist die Verbindung Bis-diethylammonium-tetrachloro-cuprat(II), die bei ca. 53°C eine fest-fest Phasenumwandlung verbunden mit einem Farbumschlag von grün nach gelb zeigt. Eine Farbänderung kann wie z.B. im Falle von Veriflex® mit einer Formänderung einhergehen.

Selbstverständlich können auch Kombinationen solcher Füllmaterialien verwendet werden. Die Füllstoffe sind geeignet, um die mechanischen, elektrischen, magnetischen, optischen und/oder thermochromen Eigenschaften eines FGPs einzustellen und an einen jeweiligen Anwendungszweck anzupassen.

In Sicherheitsetiketten gemäß den Ausführungsbeispielen der vorliegenden Erfindung können thermo-sensitive, UV- oder magnetosensitive und elektroaktive FGPe verwendet werden. Optisch steuerbare Formgedächtnispolymere sind z.B. Butylacrylate, die an ihren Seitenketten über Zimtsäure-Gruppen unter UV-Licht einer bestimmten Wellenlänge vernetzen und die Bindung bei Bestrahlung mit einer anderen Wellenlänge wieder lösen. Magnetisch steuerbare Formgedächtnispolymere können z. B. durch Einarbeitung fein verteilter magnetischer Nanoteilchen aus z.B. Eisenoxid in den Kunststoff erhalten werden. Solche Materialien sind dann in der Lage, die Energie eines magnetischen Feldes in Wärme umzuwandeln. Über den Anteil an Nanoteilchen und die Stärke des Magnetfeldes kann eine gewünschte Temperatur im Polymer gezielt eingestellt werden. Als elektroaktive Polymere (EAP) können z.B. Formgedächtnispolymer-Komposite mit Kohlenstoffnanoröhrchen eingesetzt werden.

Weitere Beispiele für thermoplastische Elastomere sind Multiblockcopolymere. Typische Multiblockcopolymere sind zusammengesetzt aus den Blöcken (Makrodiolen) bestehend aus (α,ω,)-Diol-Polymeren von Poly(ε-caprolacton) (PCL), Poly(ethylen glycol) (PEG), Poly(pentadecalacton), Poly(ethylenoxid), Poly(propylenoxid), Poly(propylenglycol), Poly(tetrahydrofuran), Poly(dioxanon), Poly(lactid), Poly(glycolid) und Poly(lactid-ran-glycolid) oder aus α,ω-Diol-Copolymeren der Monomere, auf denen die oben genannten Verbindungen basieren, in einem Molekulargewichtsbereich Mₙ von 250 bis 500 000 g/mol. Zwei unterschiedliche Makrodiole werden mit Hilfe eines geeigneten bifunktionellen Kopplungsreagenz (im speziellen ein aliphatisches oder aromatisches Diisocyanat oder Disäurechlorid oder Phosgen) zu einem thermoplastischen Elastomer mit Molekulargewichten Mₙ im Bereich von 500 bis 50 000 000 g/mol verknüpft. In einem phasensegregierten Polymer kann bei jedem der Blöcke des o.g. Polymers unabhängig vom anderen Block eine Phase mit mindestens einem thermischen Übergang (Glas- oder Schmelzübergang) zugeordnet werden.

Anwendbar sind auch Multiblockcopolymere aus Makrodiolen basierend auf Pentadecalacton (PDL) und ε-Caprolacton (PCL) und einem Diisocyanat. Die Schalttemperatur - hier eine Schmelztemperatur - kann über die Blocklänge des PCLs im Bereich zwischen ca. 30 und 55°C eingestellt werden. Die physikalischen Netzpunkte zur Fixierung der permanenten Form werden von einer zweiten kristallinen Phase mit einem Schmelzpunkt im Bereich von 87-95°C gebildet. Auch Blends aus Multiblockcopolymeren sind geeignet. Durch das Mischungsverhältnis lassen sich die Übergangstemperaturen gezielt einstellen.

Zur Herstellung des Sicherheitsetiketts können auch Polymernetzwerke verwendet werden. Geeignete Polymernetzwerke zeichnen sich durch kovalente Netzpunkte und mindestens einem Schaltsegment mit mindestens einer Übergangstemperatur aus. Die kovalenten Netzpunkte bestimmen die permanente Form des Oberflächenprofils. Zur Herstellung eines kovalenten Polymernetzwerks wird eines der im obigen Abschnitt beschriebenen Makrodiole mit Hilfe eines multifunktionellen Kopplungsreagenz vernetzt. Dieses Kopplungsreagenz kann eine mindestens trifunktionelle, niedermolekulare Verbindung oder ein multifunktionales Polymer sein. Im Falle des Polymers kann es sich um ein Sternpolymer mit mindestens drei Armen, ein graft-Polymer mit mindestens zwei Seitenketten, ein hyperverzweigtes Polymer oder um eine dendritische Struktur handeln. Sowohl im Falle der niedermolekularen als auch der polymeren Verbindungen sollten die Endgruppen zur Reaktion mit den Diolen befähigt sein. Im speziellen können hierfür Isocyanatgruppen verwendet werden (Polyurethan-Netzwerke). Insbesondere können amorphe Polyurethannetzwerke aus Triolen und/oder Tetrolen und Diisocyanat verwendet werden. Die Darstellung sternförmiger Präpolymere wie Oligo[(rac-lactat)-co-glykolat]triol oder -tetrol erfolgt durch die ringöffnende Copolymerisation von rac-Dilactid und Diglykolid in der Schmelze der Monomere mit hydroxyfunktionellen Initiatoren unter Zusatz des Katalysators Dibutylzinn(IV)oxid (DBTO). Als Initiatoren der ringöffnenden Polymerisation werden Ethylenglykol, 1,1,1-Tris(hydroxy-methyl)ethan bzw. Pentaerythrit eingesetzt. Analog werden Oligo(lactat-co-hydroxycaproat)tetrole und Oligo(lactathydroxyethoxyacetat)tetrole sowie [Oligo(propylengiycol)-block-oligo(rac-lactat)-co-glycolat)]triole hergestellt. Solche Netzwerke können einfach durch Umsetzung der Präpolymere mit Diisocyanat, z. B. einem Isomerengemisch aus 2,2,4- und 2,4,4-Trimethylhexan-1,6-diisocyanat (TMDI), in Lösung, z.B. in Dichloromethan, und anschließender Trocknung erhalten werden.

Weiterhin können die im obigen Abschnitt beschriebenen Makrodiole zu entsprechenden α,ω-Divinylverbindungen funktionalisiert werden, die thermisch oder photochemisch vernetzt werden können. Die Funktionalisierung erlaubt bevorzugt eine kovalente Verknüpfung der Makromonomere durch Reaktionen, die keine Nebenprodukte ergeben. Bevorzugt wird diese Funktionalisierung durch ethylenisch ungesättigte Einheiten zur Verfügung gestellt, insbesondere bevorzugt durch Acrylatgruppen und Methacrylatgruppen, wobei letztere insbesondere bevorzugt sind. Hierbei kann im speziellen die Umsetzung zu α,ω-Makrodimethacrylaten, bzw. Makrodiacrylaten durch die Reaktion mit den entsprechenden Säurechloriden in Gegenwart einer geeigneten Base durchgeführt werden. Die Netzwerke werden erhalten durch das Vernetzen der endgruppenfunktionalisierten Makromonomere. Diese Vernetzung kann erreicht werden durch das Bestrahlen der Schmelze, umfassend die endgruppenfunktionalisierte Makromonomerkomponente und ggf. ein niedermolekulares Comonomer, wie nachfolgend erläutert wird. Geeignete Verfahrensbedingungen dafür sind das Bestrahlen der Mischung in Schmelze, vorzugsweise bei Temperaturen im Bereich von 40 bis 100°C, mit Licht einer Wellenlänge von vorzugsweise 308 nm. Alternativ ist eine Wärmevernetzung möglich wenn ein entsprechendes Initiatorsystem eingesetzt wird.

Werden die oben beschriebenen Makromonomere vernetzt, so entstehen Netzwerke mit einer einheitlichen Struktur, wenn lediglich eine Art an Makromonomer eingesetzt wird. Werden zwei Arten an Monomeren eingesetzt, so werden Netzwerke vom AB-Typ erhalten. Solche Netzwerke vom AB-Typ können auch erhalten werden, wenn die funktionalisierten Makromonomere mit geeigneten niedermolekularen oder oligomeren Verbindungen copolymerisiert werden. Sind die Makromonomere mit Acrylatgruppen oder Methacrylatgruppen funktionalisiert, so sind geeignete Verbindungen, die copolymersisiert werden können, niedermolekulare Acrylate, Methacrylate, Diacrylate oder Dimethacrylate. Bevorzugte Verbindungen dieser Art sind Acrylate, wie Butylacrylat oder Hexylacrylat, und Methacrylate, wie Methylmethacrylat und Hydroxyethylmethacrylat. Diese Verbindungen, die mit den Makromonomeren copolymerisiert werden können, können in einer Menge von 5 bis 70 Gew.-%, bezogen auf das Netzwerk aus Makromonomer und der niedermolekularen Verbindung vorliegen, insbesondere in einer Menge von 15 bis 60 Gew.-%. Der Einbau von variierenden Mengen der niedermolekularen Verbindung erfolgt durch Zugabe entsprechender Mengen an Verbindung zur zu vernetzenden Mischung. Der Einbau der niedermolekularen Verbindung in das Netzwerk erfolgt in einer Menge, die der in der Vernetzungsmischung enthaltenen Menge entspricht.

Durch Variation des Molgewichtes der Makrodiole lassen sich Netzwerke mit unterschiedlichen Vernetzungsdichten (bzw. Segmentlängen) und mechanischen Eigenschaften erzielen. Die kovalent zu vernetzenden Makromonomere weisen typischerweise ein Zahlenmittel des Molgewichts, bestimmt durch GPC-Analyse von 2000 bis 30000 g/mol, bevorzugt von 5000 bis 20000 g/mol und insbesondere bevorzugt von 7500 bis 15000 g/mol auf. Die kovalent zu vernetzenden Makromonomere weisen typischerweise an beiden Enden der Makromonomerkette eine Methacrylatgruppe auf. Eine derartige Funktionalisierung erlaubt die Vernetzung der Makromonomere durch einfache Photoinitiation (Bestrahlung).

Die Makromonomere sind typischerweise Polyestermakromonomere, insbesondere Polyestermakromonomere auf der Basis von ε-Caprolacton. Andere mögliche Polyestermakromonomere basieren auf Lactideinheiten, Glycolideinheiten, p-Dioxanoneinheiten und deren Mischungen und Mischungen mit ε-Caprolactoneinheiten, wobei Polyestermakromonomere mit Caprolactoneinheiten insbesondere typisch sind. Typische Polyestermakromonomere sind weiterhin Poly(caprolacton-co-glycolid) und Poly(caprolacton-co-lactid). Über das Mengenverhältnis der Comonomere lässt sich die Übergangstemperatur einstellen.

Die verwendeten Makromonomere können insbesondere Polyester sein, umfassend die vernetzbaren Endgruppen. Ein typischer einzusetzender Polyester ist ein Polyester auf der Basis von ε-Caprolacton oder Pentadecalacton, für den die oben aufgeführten Angaben über das Molgewicht gelten. Die Herstellung eines solchen Polyestermakromonomeren, an den Enden funktionalisiert, bevorzugt mit Methacrylatgruppen, kann durch einfache Synthesen, die dem Fachmann bekannt sind, hergestellt werden. Diese Netzwerke, ohne Berücksichtigung der weiteren wesentlichen polymeren Komponente der vorliegenden Erfindung, zeigen semikristalline Eigenschaften und weisen einen Schmelzpunkt der Polyesterkomponente auf (bestimmbar durch DSC-Messungen), der abhängig von der Art der eingesetzten Polyesterkomponente ist und darüber somit auch steuerbar ist. Bekanntermassen liegt diese Temperatur (Tₘ₁) für Segmente basierend auf Caprolactoneinheiten zwischen 30 und 60°C in Abhängigkeit von der Molmasse des Makromonomers.

Ein Netzwerk mit einer Schmelztemperatur als Schalttemperatur basiert auf dem Makromonomer Poly(caprolacton-co-glycolid)-dimethacrylat. Das Makromonomer kann als solches umgesetzt oder mit n-Butylacrylat zum AB-Netzwerk copolymerisiert werden. Die permanente Form wird durch kovalente Netzpunkte bestimmt. Das Netzwerk zeichnet sich durch eine kristalline Phase aus, deren Schmelztemperatur z.B. durch das Comonomerverhältnis von Caprolacton zu Glycolid gezielt eingestellt werden kann. n-Butylacrylat als Comonomer kann z.B. zur Optimierung der mechanischen Eigenschaften der Schicht verwendet werden. Ein weiteres Netzwerk mit einer Glastemperatur als Schalttemperatur wird erhalten aus einem ABA Triblockdimethacrylat als Makromonomer mit einem Mittelblock B aus Polypropylenoxid und Endblöcken A aus Poly(rac-lactid). Die amorphen Netzwerke weisen einen sehr breiten Schalttemperaturbereich auf.

Zur Herstellung von Sicherheitsetiketten mit zwei Formen im Gedächtnis sind Netzwerke mit zwei Übergangstemperaturen geeignet, wie beispielsweise interpenetrierende Netzwerke (IPNs). Das kovalente Netzwerk basiert auf Poly(caprolacton)-dimethacrylat als Makromonomer; die interpenetrierende Komponente ist ein Multiblockcopolymer aus Makrodiolen basierend auf Pentadecalacton (PDL) und ε-Caprolacton (PCL) und einem Diisocyanat. Die permanente Form des Materials wird durch die kovalenten Netzpunkte bestimmt. Die beiden Übergangstemperaturen - Schmelztemperaturen der kristallinen Phasen - lassen sich als Schalttemperaturen für jeweils eine temporäre Form nutzen. Die untere Schalttemperatur Tₜᵣₐₙₛ₁ kann über die Blocklänge des PCLs im Bereich zwischen ca. 30 und 55°C eingestellt werden. Die obere Schalttemperatur Tₜᵣₐₙₛ₂ liegt im Bereich von 87-95°C.

Weiterhin können zur Herstellung der des Sicherheitsetiketts photosensitive Netzwerke verwendet werden. Geeignete photosensitive Netzwerke sind amorph und zeichnen sich durch kovalente Netzpunkte aus, die die permanente Form bestimmen. Ein weiteres Merkmal ist eine photoreaktive Komponente bzw. eine durch Licht reversibel schaltbare Einheit, die die temporäre Form bestimmt. Im Falle der photosensitiven Polymere wird ein geeignetes Netzwerk verwendet, welches entlang der amorphen Kettensegmente photosensitve Substituenten enthält. Bei UV-Bestrahlung sind diese Gruppen fähig, kovalente Bindungen miteinander einzugehen. Deformiert man das Material und bestrahlt es mit Licht einer geeigneten Wellenlänge λ₁, wird das ursprüngliche Netzwerk zusätzlich quervernetzt. Aufgrund der Vernetzung erreicht man eine temporäre Fixierung des Materials im deformierten Zustand (Programmierung). Da die Photovernetzung reversibel ist, läßt sich durch erneutes Bestrahlen mit Licht einer anderen Wellenlänge λ₂ die Vernetzung wieder lösen und somit die ursprüngliche Form des Materials wieder abrufen. Ein solcher photomechanischer Zyklus läßt sich beliebig oft wiederholen. Die Basis der photosensitiven Materialien ist ein weitmaschiges Polymernetzwerk, das, wie vorstehend ausgeführt, transparent im Hinblick auf die zur Auslösung der Formveränderung gedachten Strahlung ist, d.h. bevorzugt eine UV-transparente Matrix bildet. Typisch sind sind Netzwerke basierend auf niedermolekularen Acrylaten und Methacrylaten, die sich radikalisch polymerisieren lassen, insbesondere C₁-C₆-(Meth)Acrylate und Hydroxyderivate, wobei Hydroxyethylacrylat, Hydroxypropylmethacrylat, Hydroxypropylacrylat, Poly(ethylenglycol)methacrylat und n-Butylacrylat und insbesondere n-Butylacrylat und Hydroxyethylmethacrylat verwendet werden können.

Als Comonomer zur Herstellung der polymeren Netzwerke wird eine Komponente eingesetzt, die für die Vernetzung der Segmente verantwortlich ist. Die chemische Natur dieser Komponente hängt natürlich von der Natur der Monomere ab. Für die Netzwerke auf der Basis der oben beschriebenen Acrylatmonomere sind geeignete Vernetzer bifunktionelle Acrylatverbindungen, die mit den Ausgangsmaterialien für die Kettensegmente geeignet reaktiv sind, so daß sie gemeinsam umgesetzt werden können. Derartige Vernetzer umfassen kurze, bifunktionelle Vernetzer, wie Ethylendiacrylat, niedermolekulare bi- oder polyfunktionelle Vernetzer, oligomere, lineare Diacrylatvernetzer, wie Poly(oxyethylen)diacrylaten oder Poly(oxypropylen)diacrylaten, und verzweigte Oligomere oder Polymere mit Acrylatendgruppen. Als weitere Komponente umfaßt das Netzwerk eine photoreaktive Komponente (Gruppe), die für die Auslösung der gezielt steuerbaren Formveränderung mitverantwortlich ist. Diese photoreaktive Gruppe ist eine Einheit, die durch Anregung mit einer geeigneten Lichtstrahlung, typischerweise UV-Strahlung zu einer reversiblen Reaktion fähig ist (mit einer zweiten photoreaktiven Gruppe), die zur Erzeugung oder Lösung von kovalenten Bindungen führt. Typische photoreaktive Gruppen sind solche, die zu einer reversiblen Photodimerisierung fähig sind. Als photoreaktive Komponenten in den photosensitiven Netzwerken dienen typischerweise verschiedene Zimtsäureester (Cinnamate, CA) und Cinnamylacylsäureester (Cinnamylacylate, CAA).

Zimtsäure und ihre Derivate dimerisieren unter UV-Licht von etwa 300 nm unter Ausbildung eines Cyclobutans. Die Dimere lassen sich wieder spalten, wenn mit UV-Licht einer kleineren Wellenlänge von etwa 240 nm bestrahlt wird. Die Absorptionsmaxima lassen sich durch Substituenten am Phenylring verschieben, verbleiben aber stets im UV-Bereich. Weitere Derivate, die sich photodimerisieren lassen, sind 1,3-Diphenyl-2-propen-1-on (Chalkon), Cinnamylacylsäure, 4-Methylcoumarin und verschiedene ortho-substituierte Zimtsäuren, Cinammyloxysilane (Silylether des Zimtalkohols).

Bei der Photodimerisierung von Zimtsäure und ähnlichen Derivaten handelt es sich um eine [2+2] Cycloaddition der Doppelbindungen zu einem Cyclobutanderivat. Sowohl die E- als auch Z-Isomere sind in der Lage, diese Reaktion einzugehen. Unter Bestrahlung läuft die E/Z-Isomerisierung in Konkurrenz zur Cycloaddition ab. Im kristallinen Zustand ist die E/Z-Isomerisierung jedoch gehindert. Aufgrund der verschiedenen Anordnungsmöglichkeiten der Isomere zueinander sind theoretisch 11 verschiedene stereoisomere Produkte (Truxillsäuren, Truxinsäuren) möglich. Der für die Reaktion erforderliche Abstand der Doppelbindungen zweier Zimtsäuregruppen beträgt etwa 4 Å.

Im weiteren werden nun verschiedene Möglichkeiten zur Programmierung der oben beschriebenen FGPen erläutert. Einzelne Programmierungsschritte können gegebenenfalls auch vertauscht werden, um die Programmierung speziellen Anforderungen anzupassen.

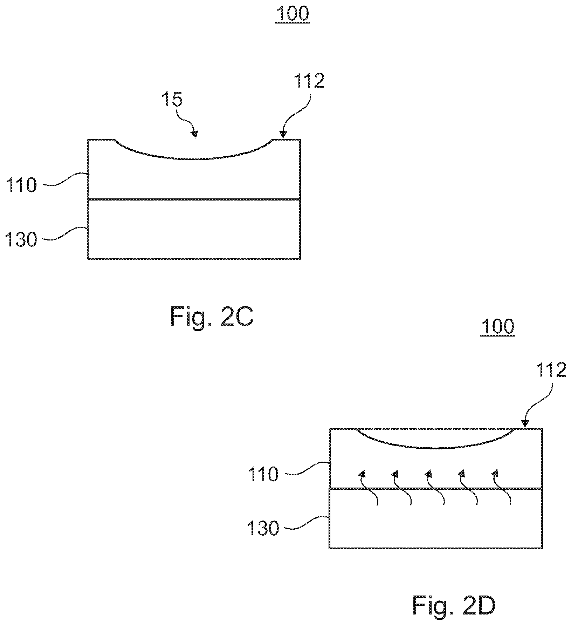

Die Fign. 2A bis 2D zeigen das Grundprinzip der Programmierung einer thermosensitiven FGP-Schicht 100. Darin wird die Schicht 110 zunächst beispielsweise mittel eines Peltierelements 130 über die Schalttemperatur Tₜᵣₐₙₛ erwärmt. In einem nächsten Schritt wird mittels eines Stempels 10 ein Oberflächenprofil in die Oberfläche 112 der Schicht 110 eingeprägt. Gleichzeitig wird die Schicht 110 mittels des Peltierelements 130 unter die Kristallisationstemperatur T_{c} abgekühlt, um das Oberflächenprofil in der Schicht 110 zu fixieren. In Fig. 2C ist der Zustand gezeigt, in dem das Oberflächenprofil 15 in der Oberfläche 112 der Schicht 110 fixiert ist. Wird die Schicht 110 anschließend wieder erwärmt, so stellt sie sich in den Ausgangszustand zurück (Fig. 2D), wobei das programmierte Oberflächenprofil abrufbar eingespeichert bleibt.

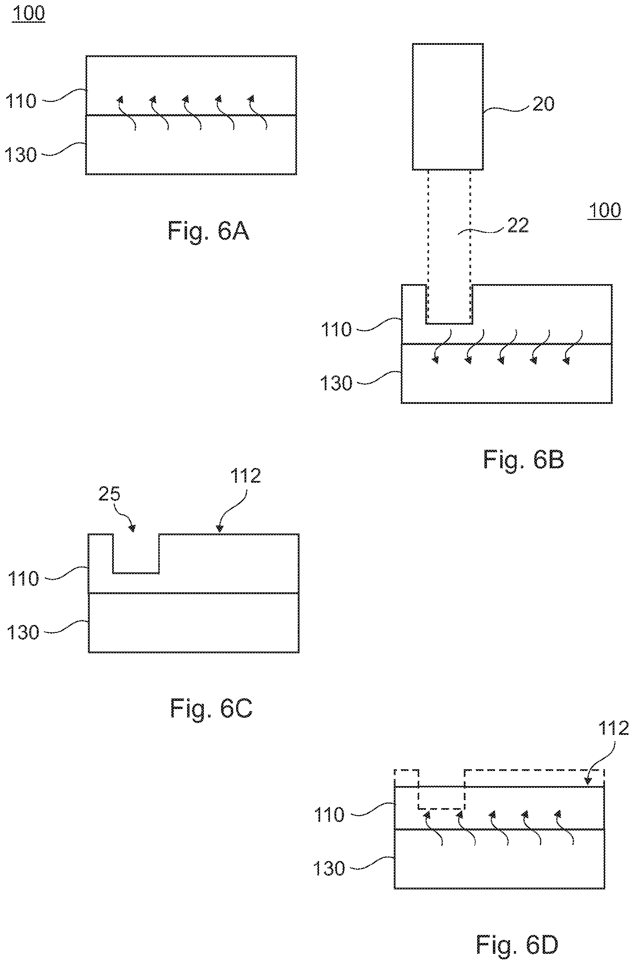

Eine alternative Ausführungsform der Programmierung einer thermosensitiven FGP-Schicht 100 ist in den Fign. 6A bis 6D gezeigt. Anders als in dem in Fig. 2 gezeigten Ausführungsbeispiel wird hierbei ein Laser 20 zum Erzeugen der permanenten Form der FGP-Schicht 100 verwendet. Zur Bearbeitung der plattenförmigen FGP-Schicht 100, wie sie beispielsweise vom Hersteller geliefert wird, sind beispielsweise Nd:YAG-Laser (Farblaser) oder CO₂-Laser geeignet, wobei insbesondere der CO₂-Laser gut geeignet ist. Mit dem Laser 20 wird ein Laserstrahl 22 erzeugt, mittels dem die Oberfläche 112 des Polymers 110 strukturiert wird (Fig. 6B). Weiterhin kann das Polymer 110 mit Hilfe des Lasers 20 auch auf eine gewünschte Form zurechtgeschnitten werden. Durch Variation der Laserleistung kann die Tiefe der Gravur optimal eingestellt werden. Beispielsweise kann eine Polymeroberfläche von ungefähr 400 mm x 300 mm bearbeitet werden, wobei eine Auflösung von 100 dpi bis 1000 dpi erreicht werden kann. Die Informationen, die in die FGP-Schicht 110 eingeprägt werden sollen, können beispielsweise als QR Code oder Data Matrix Code bereitgestellt werden. Diese Informationen können dann mittels des Lasers 20 in die Oberfläche 112 der FGP-Schicht 110 eingraviert werden, wo sie als Vertiefung 25 vorliegen (Fig. 6C). Alternativ kann die Kennzeichnung des Sicherheitsetiketts beispielsweise mit Strichcodes, Logos oder ähnlichem erfolgen. Wie bereits bei Fig. 2D beschrieben, wird anschließend die Kennzeichnung unkenntlich gemacht (Fig. 6D). Die danach verbleibende Schichtdicke ist geringer als die Schichtdicke in der permanenten Form. Dies wird in Fig. 6 durch die gestrichelten Linien veranschaulicht. Wird später der Formgedächtnis-Effekt ausgelöst, so stellt sich die Oberfläche in die permanente Form zurück und die Kennzeichnung, z.B. ein QR Code oder ein Data Matrix Code, kann mittels eines Data Matrix-Prüfgerät ausgelesen werden.

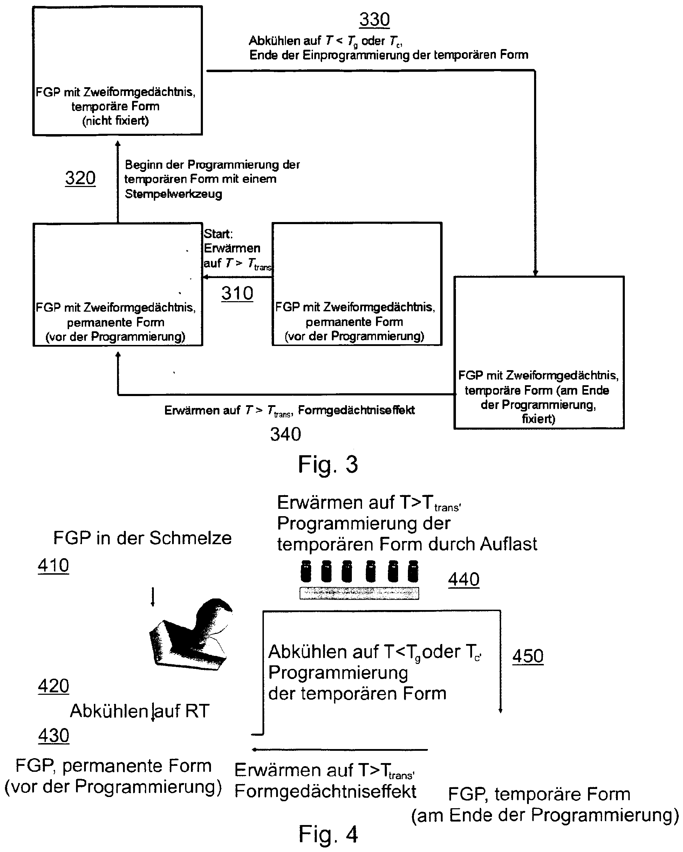

Im weiteren wird nun die Programmierung von FGPen mit Zweiformgedächtnis und Einwege-Effekt und von FGPen mit Zweiformgedächtnis und Zweiwege-Effekt anhand von Fig. 3 erläutert. Zur Erstellung eines Abbildes in einer FGP-Oberfläche als Identifikationsmerkmal kann das FGP-Label auf eine Temperatur erwärmt werden, die oberhalb von dessen Schalttemperatur liegt (Schritt 310), wobei die Schalttemperatur eine Glasübergangstemperatur oder eine Schmelztemperatur von kristallinen Segmenten des FGPs sein kann. Auf diese Weise kann das FGP-Label zur Speicherung eines dreidimensionalen Profils vorbereitet werden. Alternativ kann für FGPe auch eine Bestrahlung mit UV-Licht erfolgen, die zum Aufbrechen von Vernetzungsbindungen im FGP führt. Anschließend kann die dreidimensionale Oberflächenstruktur in die FGP-Schicht eingeprägt werden (Schritt 320), wonach diese dreidimensionale Oberflächenstruktur in der Schicht fixiert wird (Schritt 330). Dies kann beispielsweise durch Abkühlen der FGP-Schicht unter eine Glasübergangstemperatur oder eine Kristallisationstemperatur des FGPs erfolgen, wobei während des Abkühlens der Prägedruck, der auf der FGP-Oberfläche lastet, aufrecht zu halten ist. Alternativ kann für bestimmte FGPe auch eine Bestrahlung mit UV-Licht erfolgen, die zum Vernetzen des FGPs führt. Nach dem Abrufen des Formgedächtnisübergangs (Schritt 340) liegt die FGP-Schicht wieder in ihrem Ausgangszustand vor, in dem sie eine im Wesentlichen glatte Oberfläche aufweist. In einem Ausführungsbeispiel wird dies durch Erwärmen über die Schalttemperatur des FGPs beispielsweise mittels Anlegen einer elektrischen Spannung oder eines magnetischen Feldes erreicht. In einem anderen Ausführungsbeispiel wird die FGP-Schicht durch Bestrahlung mit UV-Licht in den Ausgangszustand überführt.

Ein alternatives Verfahren der Programmierung zeigt Fig. 4, wo ein Schriftzug in ein in der hochviskosen Schmelze vorliegendes FGP eingeprägt wird. Nach dem Abkühlen der Schmelze auf Raumtemperatur kann z.B. ein thermosensitives FGP durch Aufbringen einer Last bei T > Tₜᵣₐₙₛ und darauffolgender Kühlung unter T < Tg oder T < T_{c} und Aufrechterhaltung der Last in einer temporären Form fixiert werden. Die für die Verformung nötige Kraft hängt ebenso von der Härte des FGPs wie von der Umgebungstemperatur ab. Die dadurch erfolgte Deformation macht den Schriftzug unkenntlich; dieser wird erst wieder deutlich sichtbar, wenn der Formgedächtniseffekt durch Erwärmen abgerufen wird.

Gemäß Fig. 4 wird in Schritt 410 zunächst das FGP in der Schmelze bereitgestellt und sodann mittels eines Stempelwerkzeugs die gewünschte Information eingeprägt (Schritt 420). Anschließend wird die Schicht in Schritt 430 auf Raumtemperatur RT abgekühlt, um die permanente Form des FGPs festzulegen. Im nächsten Schritt 440 wird die FGP-Schicht über Tₜᵣₐₙₛ erwärmt und mittels einer Auflast geglättet. In diesem Ausführungsbeispiel entspricht also gerade die glatte Oberfläche der eingeprägten temporären Form. Anschließend wird in Schritt 450 die temporäre Form durch Abkühlen der Schicht unterhalb Tg oder T_{c} fixiert. Zum Auslesen der gespeicherten Oberflächeninformation muß nun die Schicht lediglich wieder über Tₜᵣₐₙₛ erwärmt werden (Schritt 460).

Für zahlreiche FGPe wird die Rückverformung durch das Überschreiten einer sogenannten Schalttemperatur ausgelöst. Unter diesen thermosensitiven FGPen kann man allgemein unterscheiden zwischen FGPen, für die die Schalttemperatur einem Glasübergang entspricht (Tₜᵣₐₙₛ = Tg) und FGPen, für die die Schalttemperatur der Schmelztemperatur kristalliner Weichsegmente entspricht (Tₜᵣₐₙₛ = Tₘ). Im letzteren Fall weisen die FGPe zwei Komponenten auf, wobei eine erste Komponente ein Hartsegment und die zweite Komponente eine Weichsegment ist. Deformiert man das FGP, so wird das elastische FGP durch die Hartsegmente und das Auskristallisieren amorpher Weichsegmente in seiner deformierten Form arretiert. Erwärmt man das FGP anschließend, so schmelzen die kristallinen Weichsegmente auf und verleihen dem FGP eine rückstellende Kraft, die entgegengesetzt der Einprogrammierungsrichtung wirkt. Am Ende des Formgedächtnisübergangs nimmt das FGP wieder seine ursprüngliche Form an.

In beiden Fällen erfolgt die Programmierung, indem oberhalb der Schalttemperatur eines Schaltsegments das Polymermaterial deformiert und anschließend unter Aufrechterhaltung der Deformationskräfte unter diese Temperatur (im Falle Tₜᵣₐₙₛ = Tg) bzw. unter die Kristallisationstemperatur (Tₜᵣₐₙₛ = T_{c}) abgekühlt wird, um die temporäre Form zu fixieren. Erneutes Erwärmen über die Schalttemperatur (Tₜᵣₐₙₛ = T_{g} oder Tₘ) führt zu einem Phasenübergang und der Wiederherstellung der ursprünglichen Form.

Alternativ zur thermisch indizierten Rückverformung kann dies auch durch die Bestrahlung mit UV-Licht, dem Einwirken eines Magnetfeldes oder dem Anlegen einer Spannung geschehen, wenn es sich bei dem Label um ein FGP-Komposit handelt.

Bei FGPen mit Zweiformgedächtnis und Zweiwege-Effekt genügt die Einprägung einer temporären Form oberhalb von Tₘ und deren Fixierung durch Abkühlung auf eine Temperatur unterhalb von T_{c}, um mechanische Aktivität beim erneuten Erwärmen und Abkühlen auszulösen. Ein Beispiel für eine Verbindung mit Zweiformgedächtnis und Zweiwege-Effekt ist Poly(cycloocten), das unter dem Handelsnamen Vestenamer® von der Evonik Degussa GmbH vertrieben wird. Ferner zeigen einige nematische Flüssigkristallelastomere und Fotodeformations-Polymere den reversiblen Zweiwege-Effekt bei ihrer Erwärmung/Abkühlung.

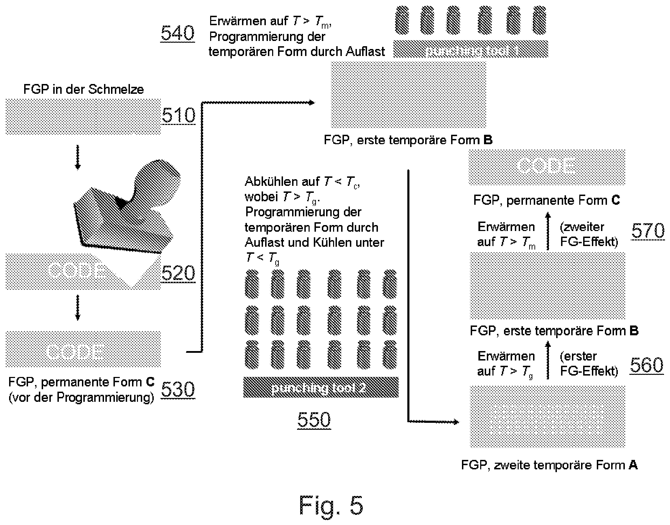

Anhand von Fig. 5 wird nun ein Herstellungsverfahren und ein Ausleseverfahren für ein Sicherheitsetikett mit FGPen mit Dreiformgedächtnis und Einwege-Effekt beschrieben. Ähnlich zu dem oben beschriebenen Verfahren kann z.B. ein Schriftzug in ein in der hochviskosen Schmelze vorliegendes FGP eingeprägt werden (Schritte 510 und 520). Nach dem Abkühlen der Schmelze auf z.B. Raumtemperatur (Schritt 530) kann z.B. ein thermosensitives FGP durch Aufbringen einer Last bei T > Tₘ und darauffolgender Kühlung unter T < T_{c} und Aufrechterhaltung der Last (punching tool 1) in einer temporären Form fixiert werden (Schritt 540). Beispielsweise macht die im Ausführungsbeispiel erfolgte Deformation den Schriftzug "CODE" unkenntlich. Eine weitere Verformung bei T < T_{c} und anschließendes Abkühlen auf T < T_{g} führen dann zur Fixierung einer zweiten Form (Schritt 550), in die die Oberflächenstruktur des Werkzeugs punching tool 2 eingeprägt ist. Nun liegt das Sicherheitsetikett im zweifach programmierten Zustand vor. Bei einem anschließenden Auslesevorgang wird die Schicht 110 auf T > T_{g} erwärmt (Schritt 560), was zur Rückbildung der ersten temporären Form führt. Ein weiteres Erwärmen auf T > Tₘ (Schritt 570) führt dann zur Rückbildung der permanenten Form.

Alternativ kann man auch von der einer glatten permanenten Form ausgehen. In diesem Fall entfällt das Einprägen des Stempels in die Polymerschmelze (Schritte 510 bis 530). Die in Fig. 5 dargestellten Einprägungen sind entsprechend den Stempelwerkzeugen beliebig wählbar.
Gemäß einem anderen Ausführungsbeispiel umfaßt ein Sicherheitsetikett zur Kennzeichnung einer Ware eine Schicht mit einem Formgedächtnispolymer, wobei die Schicht in einem ersten Zustand ein erstes Oberflächenprofil aufweist, das Informationen zur Identifizierung der Ware beinhaltet. Typischerweise ist dieser erste Zustand die permanente Form der FGP-Schicht. Hier kann beispielsweise bei der Herstellung eines Sicherheitsetiketts die FGP-Schicht mit konventionellen Verarbeitungsmethoden, wie dem Spritzguß, in eine permanente Form gebracht werden, die die gewünschte Oberflächenstruktur aufweist. Versuche haben gezeigt, daß sich die Oberfläche von sowohl Thermoplasten als auch Duroplasten mit FG-Eigenschaften nach bereits erfolgter Verarbeitung leicht mechanisch oder chemisch, beispielsweise durch Schleifen, Ätzen oder ähnliches strukturieren läßt. Nachfolgend sind Herstellungsweisen beschrieben, wie sie beispielsweise für Thermoplaste (etwa Poly(ester urethane)) geeignet sind, da sie die direkte Herstellung der FGP-Schicht in ihrer permanenten Form ermöglichen. Gemäß einem ersten Ausführungsbeispiel wird das FGP in einem gängigen Lösungsmittel, wie etwa Tetrahydrofuran, gelöst und anschließend in einer eigens hierfür angefertigten Schablone abgedampft. In einem Beispiel konnte gezeigt werden, daß sich in 5 ml Tetrahydrofuran ungefähr 200 mg Poly(ester urethan) lösen und daß die nach dem Abdampfen des Lösungsmittels erhaltene Folie die gewünschten Formgedächtnis-Eigenschaften aufwies. Gemäß einem weiteren Ausführungsbeispiel kann eine Formgedächtnis-Schicht mit dem gewünschten Oberflächenprofil als permanenter Form durch das direkte Aufschmelzen des FGPs in einem Vakuumtrockenschrank und das Gießen in eine Schablone erhalten werden. Dabei erfolgte das Aufschmelzen und Gießen bei ca. 240°C und 20 mbar. Die auf diese Weise erhaltenen FGP-Schichten wiesen gegenüber dem Ausgangsmaterial nahezu unveränderte Formgedächtnis-Eigenschaften auf. Gemäß einem anderen Ausführungsbeispiel wird das Oberflächenprofil durch mechanische Einwirkung erzeugt. Gemäß noch einem anderen Ausführungsbeispiel wird das Oberflächenprofil durch chemisches Ätzen mit starken Säuren (z.B. HCl konz.) oder starken Basen (NaOH, 1 molar) erzeugt. Für Thermoplaste und/oder Duroplaste erscheint auch die mechanische oder chemische Kennzeichnung als Alternative zur Lasergravur.

Die FGP-Schicht kann weiterhin mindestens einen zweiten Zustand einnehmen, wobei die Schicht in dem zweiten Zustand ein zweites Oberflächenprofil aufweist, das von dem ersten Oberflächenprofil verschieden ist. Beispielsweise wird in einem Programmierungsschritt die FGP-Schicht auf eine Temperatur oberhalb der Schalttemperatur Tₜᵣₐₙₛ erwärmt, durch eine Druck- oder Zugkraft deformiert und durch Abkühlen unter die Formfixierungstemperatur (Glasübergangstemperatur T_{g} oder Kristallisationstemperatur T_{c}) fixiert. In einem Ausführungsbeispiel weist die FGP-Schicht im zweiten Zustand eine glatte Oberfläche auf, so daß die permanente Form für einen Betrachter nicht erkennbar ist. Gemäß einem anderen Ausführungsbeispiel kann das zweite Oberflächenprofil ebenfalls strukturiert sein, so daß beispielsweise eine andere Information in dem zweiten Oberflächenprofil enthalten ist als in dem ersten Oberflächenprofil. Diese zweite Information kann beispielsweise zur Irreführung von Fälschern dienen.

Die temporäre Form des zweiten Oberflächenprofils wird so lange gespeichert, bis der Formgedächtnis-Effekt thermisch durch Überschreiten von Tₜᵣₐₙₛ ausgelöst wird. Das Sicherheitsetikett ist daher darauf angepaßt, daß die FGP-Schicht zum Auslesen des Sicherheitsetiketts von dem zweiten Zustand in den ersten Zustand geschaltet wird.

Zur Qualitätskontrolle kann bei der Herstellung des Sicherheitsetiketts eine Rückstellung in die permanente Form erfolgen. Stellt sich dabei heraus, daß die Information nicht in ausreichender Güte wiedergewonnen werden kann, so kann eine Nachstrukturierung der permanenten Form erfolgen und/oder die temporäre Form des Materials nochmals programmiert werden.

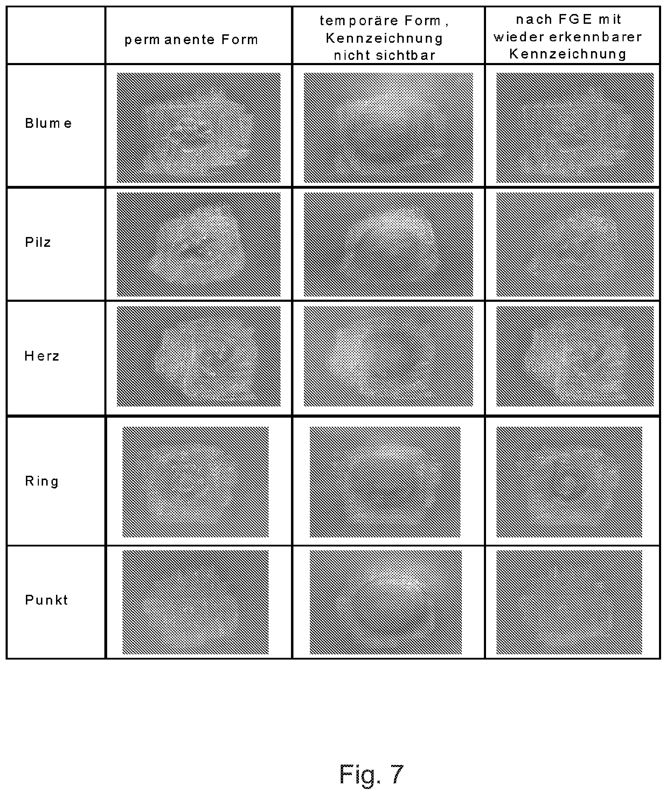

Nachfolgend ist dies für ein duroplastisches FGP, nämlich Standard Veriflex^{®} von CRG Industries in Fig. 7 dargestellt. Die Fig. 7 zeigt Bildsequenzen von Veriflex^{®}-Oberflächen nach mechanischer Vorbehandlung (links, permanente Form), nach der Programmierung mit der zweiten, glatten Oberflächenstruktur (mittig, temporäre Form) und nach dem Rückstellen auf die permanente Form durch Erwärmen über Tₜᵣₐₙₛ (rechts, permanente Form). Dabei weist Veriflex^{®} eine Übergangstemperatur von Tₜᵣₐₙₛ = T_{g} = 62 °C auf. Deutlich erkennbar wird die permanente Form praktisch perfekt wiederhergestellt.

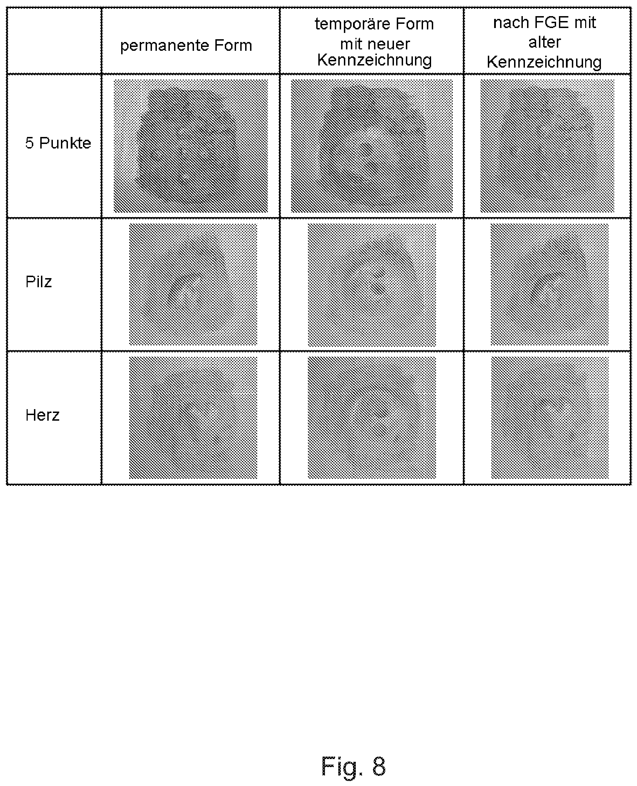

In Fig. 8 sind Beispiele dafür gezeigt, daß die temporäre Form der zweiten Oberfläche nicht zwingend eine glatte Oberfläche haben muß. Wie bereits beschrieben kann auch eine ausschließlich in der temporären Form erkennbare weitere Kennzeichnung temporär programmiert sein und so der Anschein erweckt werden, es gäbe bereits eine Kennzeichnung, und zwar die in der temporären Form erkennbare. In Fig. 8 sind links die permanenten Formen (erstes Oberflächenprofil) von Veriflex^{®}-Schichten gezeigt. Die mittlere Spalte der Fig. 8 zeigt die temporäre Oberfläche nach Programmierung mit einem 2-Punkt-Stempel (mittig, temporäre Form) und nach Erwärmen (rechts, rückgestellte permanente Form).

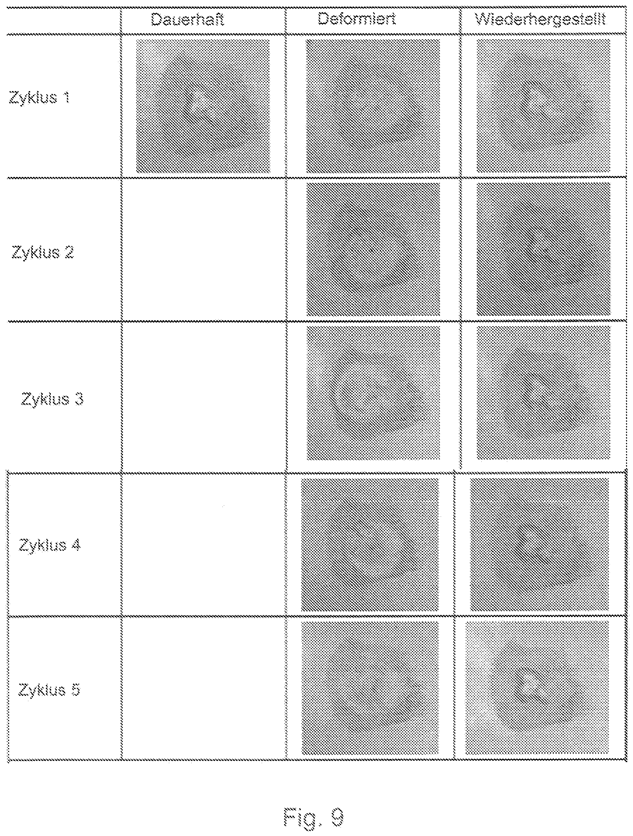

Die Eigenschaft von FGPen, leicht mechanisch in ihrer permanenten Form modifiziert werden zu können, ohne daß es später zu einer sichtbaren Beeinträchtigung der Formgedächtnis-Eigenschaft kommt, ist von Bedeutung für die Funktionalität von Sicherheitsetiketten, da so die eingeprägte sicherheitsrelevante Information mehrmals abgerufen und wieder unkenntlich gemacht werden kann. In Fig. 9 sind fünf aufeinanderfolgende Zyklen, bestehend aus einem Programmierungs- und einem Formrückgewinnungsschritt, gezeigt, die hintereinander durchlaufen wurden. Es handelt sich dabei wiederum um eine Ansicht der Oberfläche einer Veriflex^{®}-Schicht.

Ferner sei angemerkt, daß das FGP nicht nur in einer Streifen- oder Schichtform, sondern auch in anderen Formen, beispielsweise als Kugel, hergestellt werden kann. Gußformen ermöglichen die Fertigung von Kugeln mit den Durchmessern 1 mm bis mehrere Zentimeter. Auch andere geometrische Figuren wie etwa Dreiecksformen, Pyramiden, Prismen, Oktaeder, Dodekaeder und/oder andere Polyeder sind denkbar.

Die vorliegende Erfindung wurde anhand von Ausführungsbeispielen erläutert. Diese Ausführungsbeispiele sollen keinesfalls als einschränkend für die vorliegende Erfindung verstanden werden. Insbesondere können einzelne Merkmale der verschiedenen Ausführungsbeispiele in andere Ausführungsformen übernommen werden oder verschiedene Ausführungsbeispiele miteinander kombiniert werden, solange sich die kombinierten Merkmale nicht technisch bedingt gegenseitig ausschließen.

## Patentansprüche

1. Sicherheitsetikett (100) zur Kennzeichnung einer Ware, umfassend
eine Schicht (110) umfassend ein Formgedächtnispolymer, wobei die Schicht (110) in einem ersten Zustand ein erstes Oberflächenprofil (15, 25) aufweist, das Informationen zur Identifizierung der Ware beinhaltet, und wobei die Schicht mindestens einen zweiten Zustand einnehmen kann, wobei die Schicht in dem zweiten Zustand ein zweites Oberflächenprofil aufweist, das von dem ersten Oberflächenprofil verschieden ist,
wobei das Sicherheitsetikett so angepaßt ist, daß die Schicht (110) zum Auslesen des Sicherheitsetiketts von dem zweiten Zustand in den ersten Zustand schaltbar ist, und
ein Verbindungsmittel zum Verbinden der Schicht mit der Ware.

2. Sicherheitsetikett nach Anspruch 1, wobei das erste Oberflächenprofil die permanente Form der Formgedächtnispolymerschicht ist.

3. Sicherheitsetikett nach Anspruch 1 oder 2, wobei das zweite Oberflächenprofil durch Programmieren der Formgedächtnispolymerschicht erzeugt ist.

4. Sicherheitsetikett nach einem der vorhergehenden Ansprüche, wobei das zweite Oberflächenprofil eine ebene Oberfläche ist.

5. Sicherheitsetikett nach Anspruch 1,
wobei das erste Oberflächenprofil (15, 25), das Informationen zur Identifizierung der Ware beinhaltet, in die Schicht (110) eingeprägt ist.

6. Sicherheitsetikett nach einem der vorhergehenden Ansprüche, wobei in die Schicht weiterhin ein zweites Oberflächenprofil eingeprägt ist, und wobei die Schicht in einem dritten Zustand das eingeprägte zweite Oberflächenprofil aufweist,
wobei das Sicherheitsetikett so angepaßt ist, daß die Schicht beim Auslesen des Sicherheitsetiketts von dem ersten bzw. dem dritten Zustand in den dritten bzw. den ersten Zustand gebracht werden kann.

7. Sicherheitsetikett nach einem der vorhergehenden Ansprüche, wobei das Sicherheitsetikett eingerichtet ist, daß die Schicht von dem zweiten Zustand und/oder dem dritten Zustand wieder in den ersten Zustand gebracht wird.

8. Sicherheitsetikett nach einem der vorhergehenden Ansprüche, wobei die Schicht eine Dicke im Bereich von 0,1 mm bis 20 mm aufweist.

9. Sicherheitsetikett nach einem der Ansprüche 1 bis 8, wobei das Formgedächtnispolymer ausgewählt ist aus der Gruppe bestehend aus: lineare Blockcopolymere, insbesondere Polyurethane und Polyurethane mit ionischen oder mesogenen Komponenten, Blockcopolymere aus Polyethylenterephthalat und Polyethylenoxid, Blockcopolymere aus Polystyrol und Poly(1,4-butadien), ABA Triblock-Copolymere aus Poly-(2-methyl-2-oxazolin) (A-Block) und Polytetrahydrofuran (B-Block), Multiblockcopolymere aus Polyurethanen mit Poly(ε-caprolacton)-Schaltsegment, Blockcopolymere aus Polyethylenterephthalat und Polyethylenoxid, Blockcopolymere aus Polystyrol und Poly(1,4-butadien), Polyurethansysteme, deren Hartsegment-bildende Phase aus Methylendiphenyldiisocyanat (MDI) und einem Diol, insbesondere 1,4-Butandiol, oder einem Diamin und einem Schaltsegment auf der Basis eines Oligoethers, insbesondere Polytetrahydrofuran oder eines Oligoesters, insbesondere Polyethylenadipat, Polypropylenadipat, Polybutylenadipat, Polypentylenadipat oder Polyhexalenadipat, besteht, Materialien mit einer Hartsegment-bildenden Phase aus Toluol-2,4-diisocyanat, MDI, Diisocyanaten, die insbesondere aus MDI oder Hexamethylendiisocyanat in Carbodiimid-modifizierter Form und aus Kettenverlängerern, insbesondere Ethylenglycol, Bis(2-hydroxyethyl)hydrochinon oder einer Kombination aus 2,2-Bis(4-hydroxyphenyl)propan und Ethylenoxid aufgebaut sind, deren Schaltsegment-bestimmende Blöcke aus Oligoethern, insbesondere Polyethylenoxid, Polypropylenoxid, Polytetrahydrofuran oder aus einer Kombination aus 2,2-Bis(4-hydroxyphenyl)propan und Propylenoxid, oder aus Oligoestern, insbesondere Polybutylenadipat, bestehen, Materialien aus Polynorbornen, Graft-Copolymere aus Polyethylen/Nylon-6, Blockcopolymere mit polyedrischen oligomeren Silsesquioxanen (POSS), einschließlich den Kombinationen Polyurethan/POSS, Epoxid/POSS, Polysiloxan/POSS, Polymethylmethacrylat/POSS, silikonbasierte FGPe und Materialien aus Poly(cycloocten)ε-caprolacton.

10. Sicherheitsetikett nach einem der Ansprüche 1 bis 8, wobei das Formgedächtnispolymer ausgewählt ist aus der Gruppe bestehend aus:
Polyvinylchlorid, Polyethylen-Polyvinylacetat-Copolymere, kovalent vernetzte Copolymersysteme aus Stearylacrylat und Ester der Methacrylsäure, trans-Polyisopren/Polyurethan-basiertes, segregiertes FGP, Poly(ether ester) wie Poly(ethylen oxid)/Poly(ethylen terephthalat) Copolymere, Norbornyl/POSS Copolymere, Poly(methylen-1,3-cyclopentan) und dessen Copolymer mit Polyethylen, Styrol/Butadien Copolymere, Thiol-en/acrylat Copolymere, Polynorbornen, Polymernetzwerke hergestellt aus Poly(ε-caprolacton) (PCL) und Dimethacrylaten, Poly(ε-caprolacton) (PCL)-basierte FGPe, acrylat-basierte FGPe, (Meth)acrylat Netzwerke, quervernetztes Polyethylen, epoxid-basierte FGPe, ein Polyurethan/Phenoxy-Blend, ein Polyurethane/Polyvinylchlorid (PVC)-Blend.

11. Sicherheitsetikett nach einem der Ansprüche 1 bis 8, wobei das Formgedächtnispolymer als Formgedächtnispolymerkomposit ausgebildet ist, wobei in der Formgedächtnispolymermatrix mindestens ein Füllmaterial eingebettet ist, das ausgewählt ist aus der Gruppe umfassend: magnetische Nanoteilchen, ferromagnetische Partikel, insbesondere AlN-Partikel, Ni-Partikel, Fe₂O₃-Partikel, Fe₃O₄-Partikel, NiZn-Partikel, , einen Nanoclay umfassend Siliziumnitrid, Siliziumcarbid, Siliziumoxid, Zirkonoxid und/oder Aluminiumoxid, oligomere Silsesquioxane, Graphit-Partikel, Kohlenstoffnanoröhrchen, Kunstfasern, insbesondere Kohlenstoffasern, Glasfasern oder Kevlarfasern, Metallpartikel, thermochrome Materialien, insbesondere Rutil, Zinkoxid, 9,9'-Bixanthyliden, 10,10'-Bianthronyliden oder Bis-diethylammonium-tetrachloro-cuprat(II), und Kombinationen der genannten Füllmaterialien.

12. Sicherheitsetikett nach einem der Ansprüche 1 bis 8, wobei das Formgedächtnispolymer ausgewählt ist aus der Gruppe bestehend aus: ein Poly(ester urethan)-Copolymer, ein nematisches Flüssigkristallelastomer, ein Photodeformationspolymer.

13. Ware, umfassend ein Sicherheitsetikett (100) nach einem der vorhergehenden Ansprüche.

14. Verwendung eines Sicherheitsetiketts (100) nach einem der Ansprüche 1 bis 12 zur Kennzeichnung einer Ware.

15. Herstellungsverfahren für ein Sicherheitsetikett (100) nach einem der Ansprüche 1 bis 12, umfassend
Bereitstellen einer Schicht (110) umfassend ein Formgedächtnispolymer;
Erwärmen der Formgedächtnispolymerschicht über eine erste Schalttemperatur des Formgedächtnispolymers;
Einprägen einer dreidimensionalen Oberflächenstruktur, die Informationen zur Identifizierung der Ware beinhaltet, in die Formgedächtnispolymerschicht; und
Abkühlen der Formgedächtnispolymerschicht unter eine erste Fixierungstemperatur des Formgedächtnispolymers, um die Formgedächtnispolymerschicht in den ersten Zustand zu überführen.

16. Herstellungsverfahren für ein Sicherheitsetikett (100) nach Anspruch 15, weiter umfassend
Erwärmen der Formgedächtnispolymerschicht über eine zweite Schalttemperatur des Formgedächtnispolymers;
Einprägen einer zweiten dreidimensionalen Oberflächenstruktur;
Abkühlen der Formgedächtnispolymerschicht unter eine zweite Fixierungstemperatur des Formgedächtnispolymers, um die zweite dreidimensionale Oberflächenstruktur zu fixieren;
wobei die erste Schalttemperatur höher ist als die zweite Schalttemperatur, und die erste Fixierungstemperatur des Formgedächtnispolymers zwischen der ersten und der zweiten Schalttemperatur liegt, und die zweite Fixierungstemperatur des Formgedächtnispolymers unterhalb der zweiten Schalttemperatur liegt.

17. Ausleseverfahren für ein Sicherheitsetikett (100) für eine Ware, umfassend
Bereitstellen eines Sicherheitsetiketts nach einem der Ansprüche 1 bis 12,
Erwärmen des Sicherheitsetiketts (100) über eine erste Schalttemperatur des Formgedächtnispolymers, so daß die eingeprägte erste dreidimensionale Oberflächenstruktur, die erste Informationen zur Identifizierung der Ware beinhaltet, erscheint, und
Ablesen der in der ersten dreidimensionalen Oberflächenstruktur gespeicherten ersten Information bezüglich der Ware.

18. Herstellungsverfahren nach Anspruch 16, wobei das Bereitstellen der Schicht (110) umfassend ein Formgedächtnispolymer
das Bereitstellen einer Formgedächtnispolymerschicht umfasst, die eine erste und eine zweite Schalttemperatur aufweist, wobei die erste Schalttemperatur höher ist als die zweite Schalttemperatur.

19. Ausleseverfahren für ein Sicherheitsetikett nach Anspruch 17, weiter umfassend
Erwärmen des Sicherheitsetiketts (100) über eine zweite Schalttemperatur des Formgedächtnispolymers, so daß eine eingeprägte zweite dreidimensionale Oberflächenstruktur erscheint,
Ablesen der in der zweiten dreidimensionalen Oberflächenstruktur gespeicherten Information bezüglich der Ware.

## Claims

1. A security label (100) for identifying a product comprising
a layer (110) comprising a shape memory polymer, wherein the layer (110) has in a first state a first surface profile (15, 25) which contains information for identifying the product and wherein the layer can adopt at least one second state, wherein the layer in the second state has a second surface profile which differs from the first surface profile,
wherein the security label is adapted in such a manner that the layer (110) can be switched from the second state to the first state for reading the security label and
a connection means for connecting the layer to the product.

2. The security label according to claim 1, wherein the first surface profile is the permanent shape of the shape memory polymer layer.

3. The security label according to claim 1 or 2, wherein the second surface profile is produced by programming the shape memory polymer layer.

4. The security label according to one of the preceding claims, wherein the second surface profile is a planar surface.

5. The security label according to claim 1,
wherein the first surface profile (15, 25), which contains information for identification of the product, is imprinted in the layer (110).

6. The security label according to one of the preceding claims, wherein a second surface profile is furthermore imprinted in the layer and wherein the layer exhibits the second imprinted surface profile in a third state,
wherein the security label is adapted in such a manner that the layer can be changed from the first or the third state into the third or the first state when reading the security label.

7. The security label according to one of the preceding claims, wherein the security label is set up in such a manner that the layer is changed from the second state and/or the third state back into the first state.

8. The security label according to one of the preceding claims, wherein the layer exhibits a thickness in the region of 0.1 mm to 20 mm.

9. The security label according to one of claims 1 to 8, wherein the shape memory polymer is chosen from the group comprising: linear block copolymers, in particular polyurethanes and polyurethanes with ionic or mesogenic components, block copolymers made of polyethylene terephthalate and polyethylene oxide, block copolymers of polystyrene and poly(1,4-butadiene), ABA triblock copolymers of poly-(2-methyl-2-oxazoline) (A-block) and
polytetrahydrofuran (B-block), multi-block copolymers of polyurethanes with poly(ε-caprolactone) switching segment, block copolymers of polyethylene terephthalate and polyethylene oxide, block copolymers of polystyrene and poly(l,4-butadiene), polyurethane systems, the hard segment-forming phase thereof of methylene diphenyl diisocyanate (MDI) and a diol, in particular 1,4-butanediol, or a diamine and a switching segment based on an oligoether, in particular polytetrahydrofuran or an oligoester, in particular polyethylene adipate, polypropylene adipate, polybutylene adipate, polypentylene adipate or polyhexalene adipate, materials having a hard segment-forming phase of toluene-2,4-diisocyanate, MDI, diisocyanates which are in particular made from MDI or hexamethylene diisocyanate in carbodiimide-modified form and from chain extenders, in particular ethylene glycol, bis(2-hydroxyethyl) hydroquinone or a combination of 2,2-bis(4-hydroxyphenyl)propane and ethylene oxide, the switching segment-defining blocks thereof of oligoethers, in particular polyethylene oxide, polypropylene oxide, polytetrahydrofuran or a combination of 2,2-bis(4-hydroxyphenyl)propane and propylene oxide or of oligoesters, in particular polybutylene adipate, materials of polynorbornene, graft copolymers of polyethylene/nylon-6 block copolymers containing polyhedral oligomeric silsesquioxanes (POSS), including the combinations polyurethane/POSS, epoxy/POSS, polysiloxane/POSS, polymethylmethacrylate/POSS, silicone-based SMPs and materials of poly(cyclooctene)ε-caprolactone.

10. The security label according to one of claims 1 to 8, wherein the shape memory polymer is chosen from the group comprising:
polyvinyl chloride, polyethylene polyvinyl acetate copolymers, covalently cross-linked copolymer systems of stearyl acrylate and esters of methacrylic acid, trans- polyisoprene/polyurethane-based, segregated SMP, poly(ether esters) such as poly(ethylene oxide)/poly(ethylene terephthalate) copolymers, norbornyl/POSS copolymers, poly(methylene-1,3-cyclopentane) and its copolymer with polyethylene, styrene/butadiene copolymers, thiol-ene/acrylate copolymers, polynorbornene, polymer networks made from poly(ε-caprolactone) (PCL) and dimethacrylates, poly(ε-caprolactone) (PCL)-based SMPs, acrylate-based SMPs, (meth)acrylate networks, crosslinked polyethylene, epoxy-based SMPs, a polyurethane/phenoxy blend, a polyurethane/polyvinyl chloride (PVC) blend.

11. The security label according to one of claims 1 to 8, wherein the shape memory polymer is configured as a shape memory polymer composite, wherein at least one filling material is embedded in the shape memory polymer matrix, which material is chosen from the group comprising: magnetic nano-particles, ferromagnetic particles, in particular AlN particles, Ni particles, Fe₂O₃ particles, Fe₃O₄ particles, NiZn particles, a nano-clay comprising silicon nitride, silicon carbide, silicon oxide, zirconium oxide and/or aluminium oxide, oligomeric silsesquioxanes, graphite particles, carbon nanotubes, synthetic fibres, in particular carbon fibres, glass fibres or Kevlar fibres, metal particles, thermochromic materials, in particular rutile, zinc oxide, 9,9'-bi-xanthylides, 10, 10'-bi-anthronylides or bis-diethylammonium-tetrachloro-cuprate(II) and combinations of the aforementioned filling materials.

12. The security label according to one of claims 1 to 8, wherein the shape memory polymer is chosen from the group comprising: a poly(ester urethane) copolymer, a nematic liquid crystal elastomer, a photo-deformation polymer.

13. A product comprising a security label (100) according to one of the preceding claims.

14. Use of a security label (100) according to one of claims 1 to 12 for identifying a product.

15. A production method for a security label (100) according to one of claims 1 to 12, comprising
providing a layer (110) comprising a shape memory polymer;
heating of the shape memory polymer layer via a first switching temperature of the shape memory polymer;
imprinting of a three-dimensional surface structure containing information for identifying the product in the shape memory polymer layer; and
cooling of the shape memory polymer layer at a fixing temperature of the shape memory polymer to convert the shape memory polymer layer into the first state.

16. The production method for a security label (100) according to claim 15, further comprising
heating of the shape memory polymer layer over a second switching temperature of the shape memory polymer;
imprinting of a second three-dimensional surface structure;
cooling of the shape memory polymer layer at a second fixing temperature of the shape memory polymer to fix the second three-dimensional surface structure;
wherein the first switching temperature is higher than the second switching temperature and the first fixing temperature of the shape memory polymer lies between the first and second switching temperature and the second fixing temperature of the shape memory polymer lies below the second switching temperature.

17. A reading-out method for a security label (100) for a product comprising
providing a security label according to one of claims 1 to 12,
heating of the security label (100) above a first switching temperature of the shape memory polymer, so that the imprinted first three-dimensional surface structure which contains the first information for identifying the product appears, and
reading of the first information stored in the first three-dimensional surface structure in relation to the product.

18. The production method according to claim 16, wherein providing the layer (110) comprising a shape memory polymer
comprises providing a shape memory polymer layer which exhibits a first and a second switching temperature, wherein the first switching temperature is higher than the second switching temperature.

19. The reading-out method for a security label according to claim 17, further comprising
heating of the security label (100) above a second switching temperature of the shape memory polymer, so that an imprinted second three-dimensional surface structure appears,
reading of the information on the product stored in the second three-dimensional surface structure.

## Revendications

1. Étiquette de sécurité (100) pour désigner une marchandise, comprenant
une couche (110) contenant un polymère à mémoire de forme, la couche (110) présentant, dans un premier état, un premier profilé de surface (15, 25) contenant les informations d'identification de la marchandise et la couche pouvant présenter au moins un deuxième état dans lequel la couche, dans un deuxième état, présente un deuxième profilé de surface différent du premier profilé de surface en ce sens que l'étiquette de sécurité est adaptée de telle sorte que la couche (110), pour lire l'étiquette de sécurité, peut passer du deuxième état au premier état et
un moyen de liaison pour relier la couche à la marchandise.

2. Étiquette de sécurité selon la revendication 1, dans laquelle le premier profilé de surface correspond à la forme permanente de la couche du polymère à mémoire de forme.

3. Étiquette de sécurité selon la revendication 1 ou 2, dans laquelle le deuxième profilé de surface est produit en programmant la couche du polymère à mémoire de forme.

4. Étiquette de sécurité selon l'une quelconque des revendications précédentes, dans laquelle le deuxième profilé de surface est une surface plane.

5. Étiquette de sécurité selon la revendication 1,
dans laquelle le premier profilé de surface (15, 25) contient les informations d'identification de la marchandise gravées dans la couche (110).

6. Étiquette de sécurité selon l'une quelconque des revendications précédentes, dans laquelle un deuxième profilé de surface est gravé dans la couche et dans laquelle la couche présente, dans un troisième état, le deuxième profilé de surface gravé, l'étiquette de sécurité étant adaptée de telle sorte que la couche, pour lire l'étiquette de sécurité, peut passer du premier ou du troisième état au troisième ou au premier état.

7. Étiquette de sécurité selon l'une quelconque des revendications précédentes, dans laquelle l'étiquette de sécurité est disposée de telle sorte que la couche passe à nouveau du deuxième état et/ou du troisième état dans le premier état.

8. Étiquette de sécurité selon l'une quelconque des revendications précédentes, dans laquelle la couche présente une épaisseur comprise entre 0,1 mm et 20 mm.

9. Étiquette de sécurité selon l'une quelconque des revendications 1 à 8, dans laquelle le polymère à mémoire de forme est choisi dans le groupe composé de : copolymères à blocs linéaires, en particulier du polyuréthane et du polyuréthane avec des composants ioniques ou mésogènes, de copolymères à blocs de polyéthylène-téréphtalate et de poly(oxyde d'éthylène), de copolymères à blocs de polystyrène et de poly(butadiène-1,4), de copolymères à trois blocs ABA de poly-(2-méthyl-2-oxazoline) (bloc A) et de polytétrahydrofuranne (bloc B), de copolymères multiblocs de polyuréthanes avec un segment de commutation en poly(ε-caprolactone), de copolymères à blocs de polyéthylène-téréphtalate et de poly(oxyde d'éthylène), de copolymères à blocs de polystyrène et de poly(butadiène-1,4), de systèmes de polyuréthane, dont la phase de formation du segment dur est composée de diphényldiisocyanate de méthylène (MDI) et d'un diol, en particulier de butanediol-1,4 ou d'une diamine et d'un segment de commutation sur la base d'un oligoéther, en particulier du polytétrahydrofuranne ou d'un oligoester, en particulier du polyéthylène adipate, du polypropylène adipate, du polybutylène adipate, du polypentylène adipate ou du polyhexalène, de matériaux présentant une phase de formation de segment dur en toluol-2,4-diisocyanate, MDI, en diisocyanates, composés en particulier de MDI ou d'hexaméthylène diisocyanate dans la forme modifiée de carbodiimide et d'agents d'allongement de chaîne, en particulier de glycol éthylénique, de bis(2-hydroxyéthyl)hydrochinone ou d'une combinaison de 2,2-bis(4-hydroxyphényl)propane et d'oxyde d'éthylène, dont les blocs définissant le segment de commutation sont composés d'oligoéthers, en particulier d'oxyde de polyéthylène, d'oxyde de polypropylène, de polytétrahydrofuranne ou d'une combinaison de 2,2-bis(4-hydroxyphényl)propane et d'oxyde de propylène ou d'oligoesters, en particulier du polybutylène adipate, de matériaux en polynorbornène, de copolymères greffés en polyéthylène/nylon-6, de copolymères à blocs avec des silsesquioxanes oligomères polyhédriques (POSS), y compris les combinaisons de polyuréthane/POSS, d'époxyde/POSS, de polysiloxane/POSS, de polyméthylméthacrylate/POSS, de FGPe à base de silicone et de matériaux en poly(cyclooctène)ε-caprolactone.

10. Étiquette de sécurité selon l'une quelconque des revendications 1 à 8, dans laquelle le polymère à mémoire de forme est choisi dans le groupe composé de : chlorure de polyvinyle, de copolymères de polyéthylène-polyvinylacétate, de systèmes de copolymère réticulés de manière covalente en acrylate de stéaryle et d'ester d'acide méthacrylique, de FGP isolé, à base de trans-polyisoprène/polyuréthane, de poly(ester d'éther) comme les copolymères d'oxyde de polyéthylène/poly(éthylène-téréphtalate), les copolymères de norbornyle/POSS, de poly(méthylène-1,3-cyclopentane) et son copolymère de polyéthylène, les copolymères de styrène/butadiène, les copolymères de thiol-ène/acrylate, de polynorbomes, de réseaux polymères composés de poly(ε-caprolactone) (PCL) et de diméthacrylates, de FGPe à base de poly(ε-caprolactone)(PCL), de FGPe à base d'acrylate, de réseaux de (méth)acrylate, de polyéthylène réticulé, de FGPe à base d'époxyde, d'un mélange de polyuréthane/phénoxy, d'un mélange de polyuréthane/poly(chlorure de vinyle) (PVC).

11. Étiquette de sécurité selon l'une quelconque des revendications 1 à 8, dans laquelle le polymère à mémoire de forme est composé d'un composite de polymère à mémoire de forme, étiquette dans laquelle, dans la matrice du polymère à mémoire de forme, au moins un matériau de remplissage est incorporé, ce matériau étant choisi dans le groupe composé de : nanoparticules magnétiques, de particules ferromagnétiques, en particulier de particules d'AlN, de particules de Ni, de particules Fe₂O₃, de particules de Fe₃O₄, de particules de NiZn, d'un nano-argile composé de nitrure de silicium, de carbure de silicium, d'oxyde de silicium, de zircone et/ou d'oxyde d'aluminium, de silsesquioxane oligomère, de particules de graphite, de nanotubes de carbone, de fibres synthétiques, en particulier de fibres de carbone, de fibres de verre ou de fibres de kevlar, de particules de métal, de matériaux thermochromes, en particulier de rutile, d'oxyde de zinc, de 9,9'-bixanthylidène, de 10,10'-bianthronylidène ou de bis-diéthylammonium-tétrachloro-cuprate(II) et de combinaisons des matériaux de remplissage cités.

12. Étiquette de sécurité selon l'une quelconque des revendications 1 à 8, dans laquelle le polymère à mémoire de forme est choisi dans le groupe composé de : un copolymère de poly(ester uréthane), un élastomère de cristal liquide nématique, un polymère de photodéformation.

13. Marchandise composée d'une étiquette de sécurité (100) selon l'une quelconque des revendications précédentes.

14. Utilisation d'une étiquette de sécurité (100) selon l'une quelconque des revendications 1 à 12 pour désigner une marchandise.

15. Procédé de fabrication pour une étiquette de sécurité (100) selon l'une quelconque des revendications 1 à 12, comprenant
la mise à disposition d'une couche (110) comprenant un polymère à mémoire de forme ;
le chauffage de la couche du polymère à mémoire de forme au-dessus d'une première température de commutation du polymère à mémoire de forme ;
la gravure d'une structure de surface tridimensionnelle contenant les informations d'identification de la marchandise dans la couche du polymère à mémoire de forme ; et
le refroidissement de la couche du polymère à mémoire de forme sous une première température de fixation du polymère à mémoire de forme pour amener la couche du polymère à mémoire de forme dans le premier état.

16. Procédé de fabrication pour une étiquette de sécurité (100) selon la revendication 15, comprenant en outre
le chauffage de la couche du polymère à mémoire de forme au-dessus d'une deuxième température de commutation du polymère à mémoire de forme ;
la gravure d'une deuxième structure de surface tridimensionnelle ;
le refroidissement de la couche du polymère à mémoire de forme sous une deuxième température de fixation du polymère à mémoire de forme pour fixer la deuxième structure de surface tridimensionnelle ;
dans lequel la première température de commutation est supérieure à la deuxième température de commutation et la première température de fixation du polymère à mémoire de forme est comprise entre la première et la deuxième température de commutation et la deuxième température de fixation du polymère à mémoire de forme est inférieure à la deuxième température de commutation.

17. Procédé de lecture pour une étiquette de sécurité (100) pour une marchandise, comprenant
la mise à disposition d'une étiquette de sécurité selon les revendications 1 à 12 ;
le chauffage de l'étiquette de sécurité (100) au-dessus d'une première température de commutation du polymère à mémoire de forme, de telle sorte que la première structure de surface tridimensionnelle gravée, contenant les informations d'identification de la marchandise, apparaît ; et
la lecture des premières informations concernant la marchandise stockées dans la première structure de surface tridimensionnelle.

18. Procédé de fabrication selon la revendication 16, dans lequel la mise à disposition de la couche (110) comprenant un polymère à mémoire de forme comprend la mise à disposition d'une couche de polymère à mémoire de forme présentant une première et une deuxième température de commutation, la première température de commutation étant supérieure à la deuxième température de commutation.

19. Procédé de lecture pour une étiquette de sécurité selon la revendication 17, comprenant en outre
le chauffage de l'étiquette de sécurité (100) au-dessus d'une deuxième température de commutation du polymère à mémoire de forme, de telle sorte qu'une deuxième structure de surface tridimensionnelle gravée apparaît ;
la lecture des informations concernant la marchandise stockées dans la deuxième structure de surface tridimensionnelle.
